# EUROPEAN PATENT SPECIFICATION

(11) **EP 0 785 463 B1**
(45) Date of publication and mention of the grant of the patent: **21.02.2001**
(21) Application number: 96115307.9
(22) Date of filing: 24.09.1996
(51) Int. Cl.: G03C 1/498

(54) **Heat-developable light-sensitive material**
Wärmeentwickelbares lichtempfindiches Material
Matériau sensible à la lumière développable à chaud

(30) Priority: 28.09.1995 JP 25047795
(43) Date of publication of application: 23.07.1997
(73) Proprietor: FUJI PHOTO FILM CO., LTD., Kanagawa-ken (JP)
(72) Inventor: Arai, Tsutomu, Minami Ashigara-shi, Kanagawa (JP); Ishizaka, Tatsuya, Minami Ashigara-shi, Kanagawa (JP)
(74) Representative: Grünecker, Kinkeldey, Stockmair & Schwanhäusser Anwaltssozietät

(56) References cited:
- EP-A- 0 721 146
- EP-A- 0 723 188
- EP-A- 0 762 196
- WO-A-96/21174
- WO-A-97/11408
- US-A- 5 434 043

## Description

### FIELD OF THE INVENTION

The present invention relates to a heat-developable light-sensitive material, particularly to a heat-developable light-sensitive material suitable for a printing plate making process.

### BACKGROUND OF THE INVENTION

Heat-developable light-sensitive materials of forming a photographic image according to a heat developing method are disclosed in, for example, U.S. Patents 3,152,904 and 3,457,075 and D. Morgan and B. Shelly, "Thermally Processed Silver Systems", Imaging Processes and Materials, Neblette, 8th ed., compiled by Sturge, V. Walworth and A. Shepp, page 2 (1969).

The heat-developable light-sensitive material contains a silver source (e.g., organic silver salt) capable of reduction, a photocatalyst (e.g., silver halide) in an amount of catalytic activity, a color toner for controlling silver tone and a reducing agent, which are usually dispersed in a binder matrix. The heat-developable light-sensitive material is stable at room temperature, however, when it is heated at a high temperature (e.g., 80°C or higher) after exposure, silver is produced through an oxidation-reduction reaction between a silver source (which functions as an oxidizing agent) capable of reduction and a reducing agent. The oxidation-reduction reaction is accelerated by the catalytic action of a latent image generated upon exposure. Silver produced by the reaction of an organic silver salt in the exposure region provides a black image and makes a contrast to the non-exposure region, thereby forming an image.

The above-described heat-developable light-sensitive material has been used as a microphotographic light-sensitive material or for X-ray photographing, however, it is being used only partly as a light-sensitive material for printing. This is because the image obtained is low in Dmax and soft in gradation and the image quality is very bad as a light-sensitive material for use in a printing plate making process.

On the other hand, recently, scanners or image-setters using a laser or a light emission diode have been developed. As a result, light-sensitive materials having adaptability to these output apparatuses and having high sensitivity, high Dmax and high contrast are being strongly demanded.

US-A-5 434 043 describes a negative-acting, photothermographic element comprising core-shell photosensitive silver halide grains doped with iridium, a non-photosensitive, reductible source of silver and a reducing agent for said silver source. The reducing agent may be a combination of alphatic carboxylic aryl hydrazides and ascorbic acid or a combination of polyhydroxybenzene and hydroxylamine, a reductone and/or hydrazine.

U.S. Patent 3,667,958 describes a heat-developable light-sensitive material using a polyhydroxybenzene in combination with a hydroxylamine, a reductone or a hydrazine, stating that the material has a high image quality identification ability and resolution, but it has no description of silver halide containing at least one ion or complex ion of metals belonging to Group VII or Group VIII in the Periodic Table.

JP-A-2-236542 describes a heat-developable light-sensitive material prevented from heat fogging by incorporating a polyvalent metal ion into silver halide, however, it has no description of the combination use of this silver halide with a hydrazine derivative.

JP-A-4-358144 describes a heat-developable light-sensitive material using silver halide having incorporated therein an iridium ion so as to improve high illumination intensity reciprocity-law failure, however, it has no description of the combination use of this silver halide with a hydrazine derivative.

On the other hand, in the field of a silver halide light-sensitive material to be processed using a developer, it is known to obtain a contrast photographic property using a hydrazine derivative. For example, U.S. Patent 4,681,836 (corresponding to JP-B-3-7929) describes a combination of an emulsion comprising silver halide containing a rhodium ion with a hydrazine derivative, thereby achieving increase in the contrast and reduction in the fog, however, whether or not this technique can be used in a heat-developable light-sensitive material is not described therein.

### SUMMARY OF THE INVENTION

The object of the present invention is to provide a heat-developable light-sensitive material which has high sensitivity and high Dmax, can be used in a printing plate making process and exhibits a contrast photographic property, and an image formation method free from wet processing and capable of complete dry processing.

The above-described object of the present invention has been attained by a heat-developable light-sensitive material comprising at least an organic acid silver, silver halide and a hydrazine derivative, wherein the silver halide contains at least one ion or complex ion of metals selected from Mn, Re, Fe, Co, Ni and Os.

The object of the present invention has been also attained by a method for forming an image comprising imagewise exposing a heat-developable light-sensitive material comprising at least an organic acid silver, a developer, silver halide and a hydrazine derivative and then heating the material to form a black-and-white image comprising silver, wherein the silver halide contains at least one ion or complex ion of metals selected from Mn, Re, Fe, Co, Ni and Os.

### DETAILED DESCRIPTION OF THE INVENTION

The hydrazine derivative for use in the present invention is preferably represented by the following formula (I): 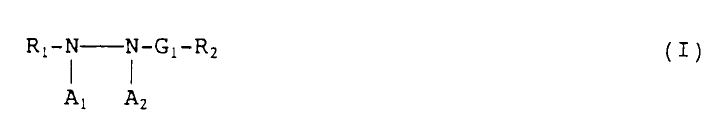 wherein R₁ represents an aliphatic group or an aromatic group, R₂ represents a hydrogen atom, an alkyl group, an aryl group, an unsaturated heterocyclic group, an alkoxy group, an aryloxy group, an amino group or a hydrazino group, and G₁ represents a -CO- group, an -SO₂- group or an -SO- group, 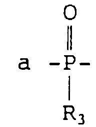 a -CO-CO- group, a thiocarbonyl group or an iminomethylene group, A₁ and A₂ both represent a hydrogen atom or one represents a hydrogen atom and the other represents a substituted or unsubstituted alkylsulfonyl group, a substituted or unsubstituted arylsulfonyl group or a substituted or unsubstituted acyl group, and R₃ represents a group selected from the same range as defined for R₂ and may be different from R₂.

In formula (I), the aliphatic group represented by R₁ is preferably an aliphatic group having from 1 to 30 carbon atoms, more preferably a linear, branched or cyclic alkyl group having from 1 to 20 carbon atoms. The branched alkyl group may be cyclized to form a saturated heterocyclic ring containing therein one or more hetero atoms. The alkyl group may have a substituent.

In formula (I), the aromatic group represented by R₁ is a monocyclic or bicyclic aryl group or an unsaturated heterocyclic group. The unsaturated heterocyclic group may be ring-condensed with a monocyclic or bicyclic aryl group to form a heteroaryl group. Examples of the ring formed by R₁ include a benzene ring, a naphthalene ring, a pyridine ring, a pyrimidine ring, an imidazole ring, a pyrazole ring, a quinoline ring, an isoquinoline ring, a benzimidazole ring, a thiazole ring and a benzothiazole ring. In particular, those containing a benzene ring are preferred.

R₁ is particularly preferably an aryl group.

The aliphatic group or aromatic group represented by R₁ may be substituted with one or more substituents. Specific examples of the substituent include an alkyl group, an alkenyl group, an alkynyl group, an aryl group, a group containing a heterocyclic ring, a pyridinium group, a hydroxyl group, an alkoxy group, an aryloxy group, an acyloxy group, an alkylsulfonyloxy group, an arylsulfonyloxy group, an amino group, a carbonamido group, a sulfonamido group, a ureido group, a thioureido group, a semicarbazido group, a thiosemicarbazido group, a urethane group, a group having a hydrazide structure, a group having a quaternary ammonium structure, an alkylthio group, an arylthio group, an alkylsulfonyl group, an arylsulfonyl group, an alkylsulfinyl group, an arylsulfinyl group, a carboxyl group, a sulfo group, an acyl group, an alkoxycarbonyl group, an aryloxycarbonyl group, a carbamoyl group, a sulfamoyl group, a halogen atom, a cyano group, a phosphoric acid amido group, a diacylamino group, an imido group, a group having an acylurea structure, a group containing a selenium atom or a tellurium atom, and a group having a tertiary sulfonium structure or a quaternary sulfonium structure. Preferred examples of the substituents include a linear, branched or cyclic alkyl group (preferably having from 1 to 20 carbon atoms), an aralkyl group (preferably monocyclic or bicyclic with the alkyl moiety having from 1 to 3 carbon atoms), an alkoxy group (preferably having from 1 to 20 carbon atoms), a substituted amino group (preferably an amino group substituted with an alkyl group having from 1 to 20 carbon atoms), an acylamino group (preferably having from 2 to 30 carbon atoms), a sulfonamido group (preferably having from 1 to 30 carbon atoms), a ureido group (preferably having from 1 to 30 carbon atoms) and a phosphoric acid amido group (preferably having from 1 to 30 carbon atoms).

In formula (I), the alkyl group represented by R₂ is an alkyl group having from 1 to 4 carbon atoms, and the aryl group represented by R₂ is preferably a monocyclic or bicyclic aryl group, for example, one containing a benzene ring.

The unsaturated heterocyclic group represented by R₂ is a 5- or 6-membered ring compound containing at least one of a nitrogen atom, an oxygen atom and a sulfur atom. Examples thereof include an imidazolyl group, a pyrazolyl group, a triazolyl group, a tetrazolyl group, a pyridyl group, a pyridinium group, a quinolinium group and a quinolinyl group. A pyridyl group or a pyridinium group are particularly preferred.

The alkoxy group represented by R₂ is preferably an alkoxy group having from 1 to 8 carbon atoms, the aryloxy group represented by R₂ is preferably a monocyclic aryloxy group, and the amino group represented by R₂ is preferably an unsubstituted amino group, an alkylamino group having from 1 to 10 carbon atoms, or an arylamino group having from 6 to 10 carbon atoms.

R₂ may be substituted with one or more substituents and preferred substituents include those exemplified for the substituents of R₁.

When G₁ is -CO-, R₂ is preferably a hydrogen atom, an alkyl group (e.g., methyl, trifluoromethyl, 3-hydroxypropyl, 3-methanesulfonamidopropyl, phenylsulfonylmethyl), an aralkyl group (e.g., o-hydroxybenzyl), an aryl group (e.g., phenyl, 3,5-dichlorophenyl, o-methanesulfonamidophenyl, 4-methanesulfonylphenyl, 2-hydroxymethylphenyl), or -C₂F₄COOM (M represents a hydrogen atom or an alkali metal atom).

When G₁ is -SO₂-, R₂ is preferably an alkyl group (e.g., methyl), an aralkyl group (e.g., o-hydroxybenzyl), an aryl group (e.g., phenyl) or a substituted amino group (e.g., dimethylamino).

When G₁ is -COCO-, R₂ is preferably an alkoxy group, an aryloxy group or an amino group.

In formula (I), G₁ is preferably -CO- or -COCO-, and most preferably -CO-.

R₂ may be a group which induces a cyclization reaction by cleaving the -G₁-R₂ moiety from the remaining molecule to form a cyclic structure containing atoms in the -G₁-R₂ moiety. Examples thereof include those described, for example, in JP-A-63-29751.

A₁ and A₂ are each a hydrogen atom, an alkylsulfonyl or arylsulfonyl group having from 1 to 20 carbon atoms (preferably, a phenylsulfonyl group or a phenylsulfonyl group substituted so that the sum of Hammett's substituent constants becomes -0.5 or more) or an acyl group having from 1 to 20 carbon atoms (preferably a benzoyl group, a benzoyl group substituted so that the sum of Hammett's substituent constants becomes -0.5 or more, or a linear, branched or cyclic, unsubstituted or substituted aliphatic acyl group (examples of the substituent includes a halogen atom, an ether group, a sulfonamido group, a carbonamido group, a hydroxyl group, a carboxyl group, a sulfone group)).

A₁ and A₂ are most preferably a hydrogen atom.

In formula (I), R₁ and R₂ each may be further substituted with a substituent and preferred examples of the substituent include those exemplified for the substituent of R₁. Furthermore, the substituent may be substituted in multiple ways such that the substituent, the substituent of the substituent, the substituent of the substituent of the substituent ... is substituted and examples of the substituents also include those exemplified for the substituent of R₁.

In formula (I), R₁ or R₂ may be one having integrated thereinto a ballast group or a polymer commonly used in the immobile photographic additives such as a coupler. The ballast group is a group having 8 or more carbon atoms and relatively inactive to the photographic properties and examples thereof include an alkyl group, an aralkyl group, an alkoxy group, a phenyl group, an alkylphenyl group, a phenoxy group and an alkylphenoxy group. Examples of the polymer include those described, for example, in JP-A-1-100530.

In formula (I), R₁ or R₂ may be one having integrated thereinto a group capable of intensifying the adsorption onto the silver halide grain surface. Examples of the adsorptive group include the groups described in U.S. Patents 4,385,108 and 4,459,347, JP-A-59-195233, JP-A-59-200231, JP-A-59-201045, JP-A-59-201046, JP-A-59-201047, JP-A-59-201048, JP-A-59-201049, JP-A-61-170733, JP-A-61-270744, JP-A-62-948, JP-A-63-234244, 63-234244, JP-A-63-234245 and JP-A-63-234246, such as an alkylthio group, an arylthio group, a thiourea group, a heterocyclic thioamido group, a mercapto heterocyclic group and a triazole group.

The hydrazine derivative preferred in the present invention is a hydrazine derivative where R₁ is a phenyl group having a ballast group, a group which accelerates adsorption on the silver halide grain surface, a group having a quaternary ammonium structure or a phenyl group having an alkylthio group through a sulfonamido group, an acylamino group or a ureido group; G is -CO-; and R₂ is a hydrogen atom, a substituted alkyl group or a substituted aryl group (the substituent is preferably an electron-withdrawing group or a hydroxymethyl group at the 2-position). With respect to the selected groups for each of R₁ and R₂, any combination may be freely used and preferred.

Specific examples of the hydrazine derivatives represented by formula (I) are shown below;

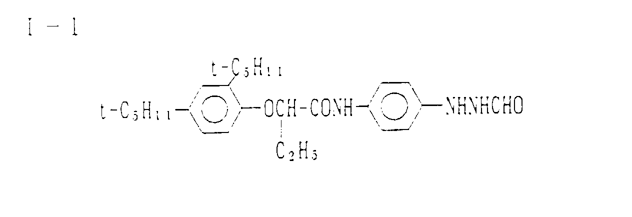

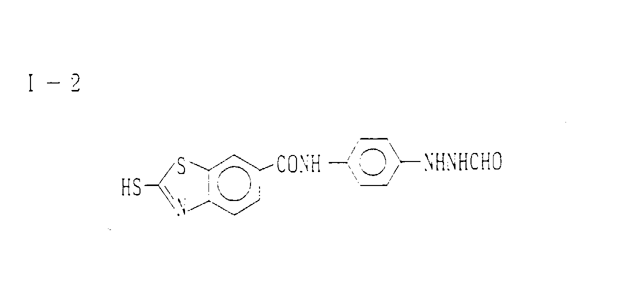

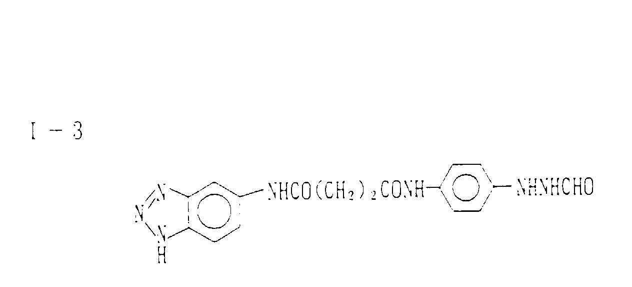

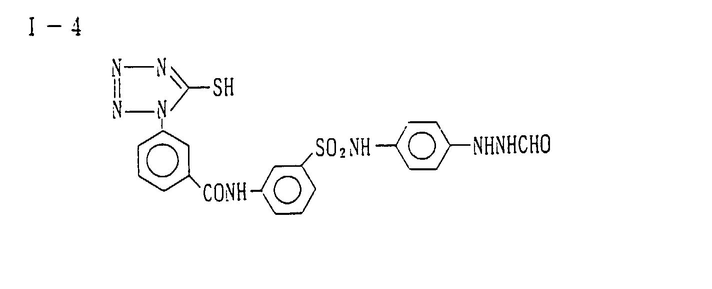

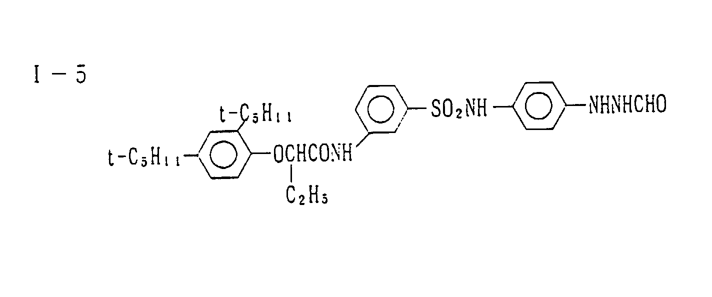

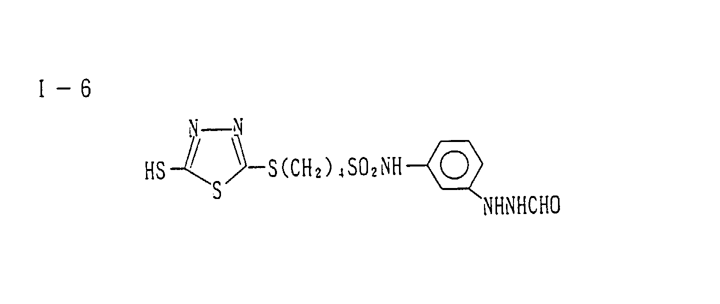

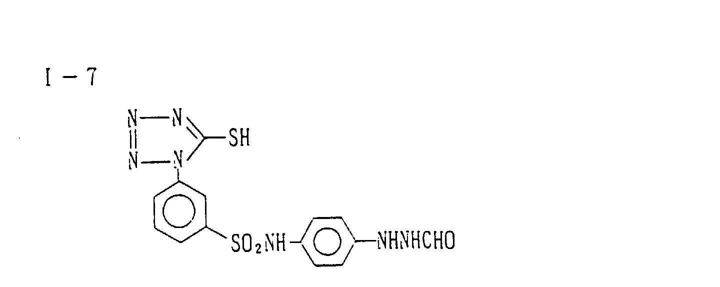

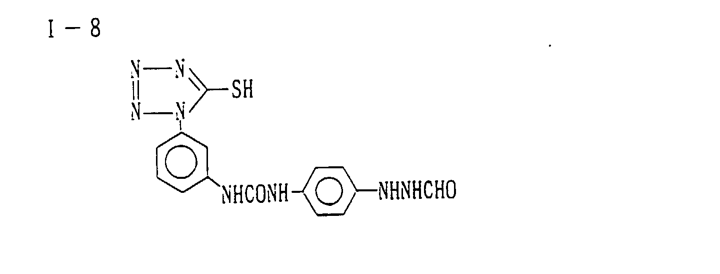

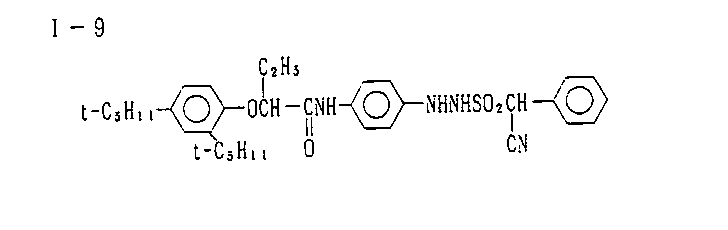

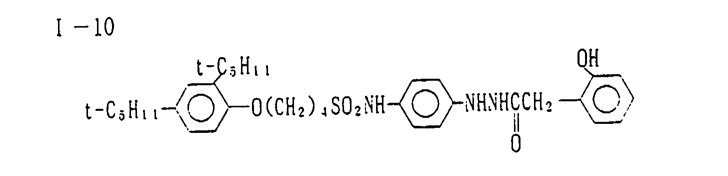

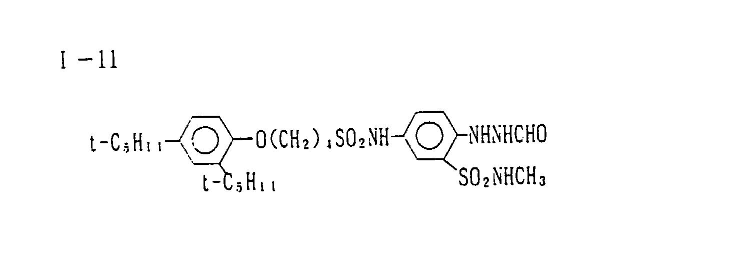

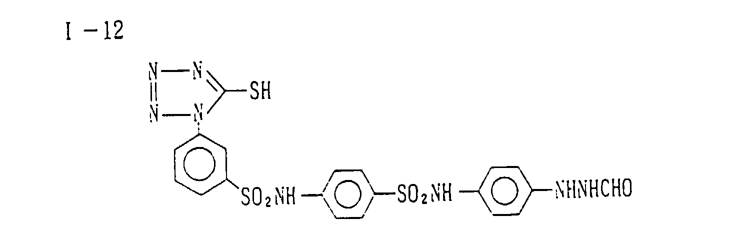

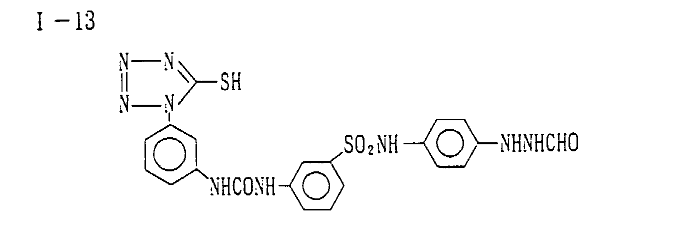

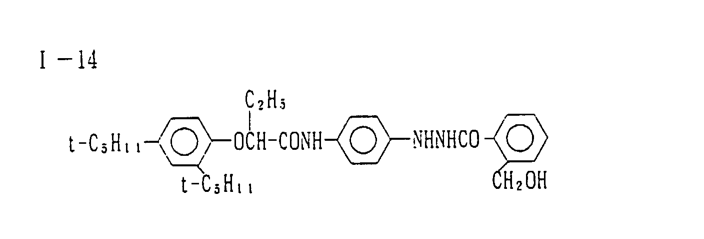

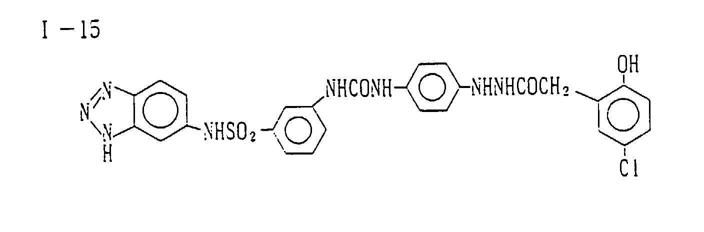

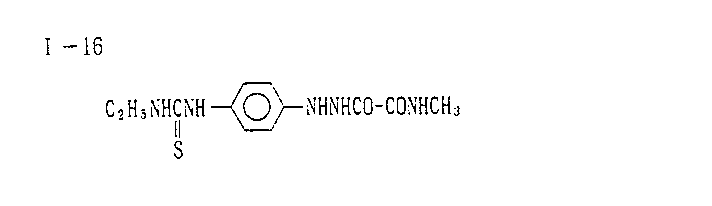

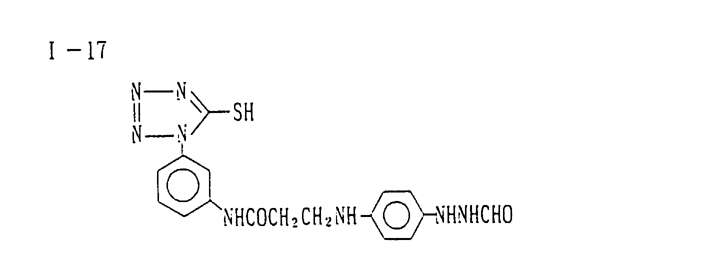

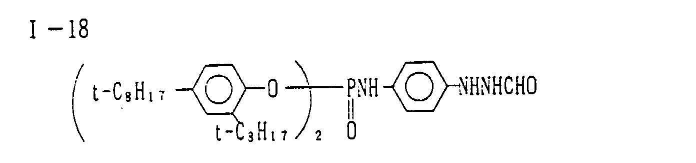

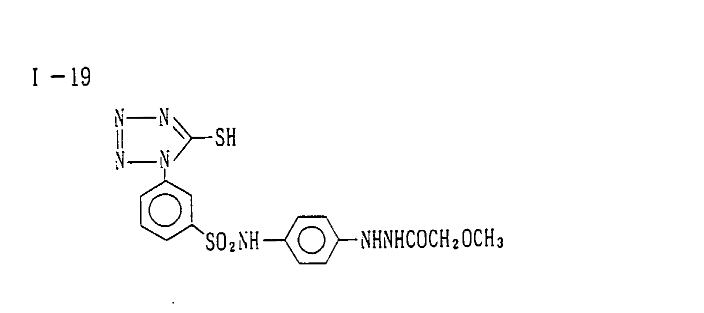

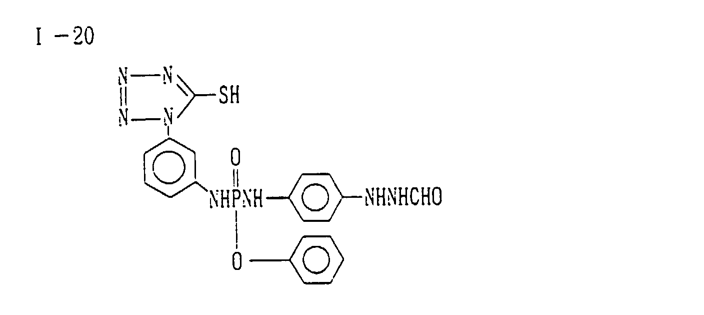

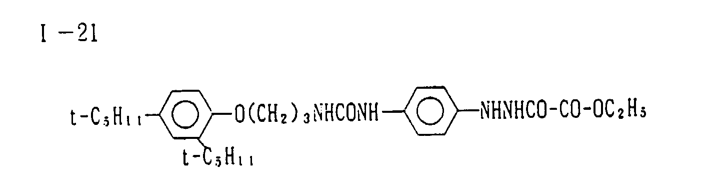

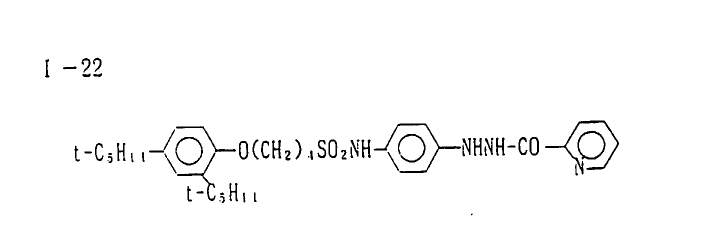

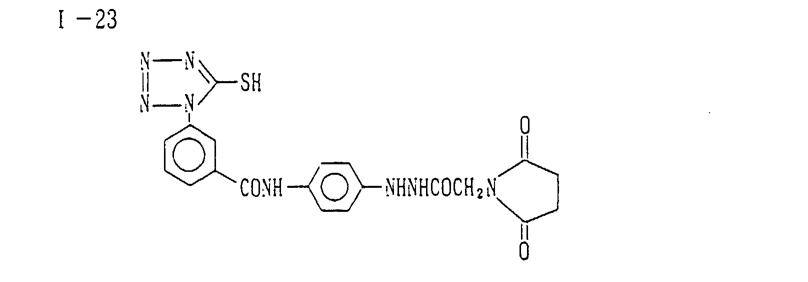

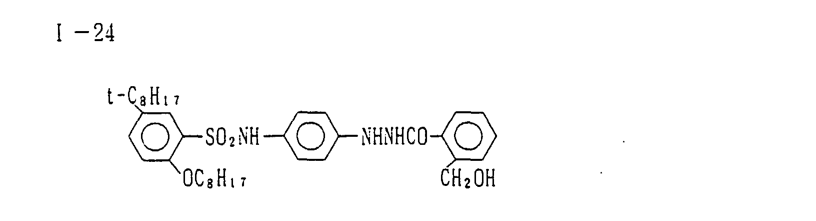

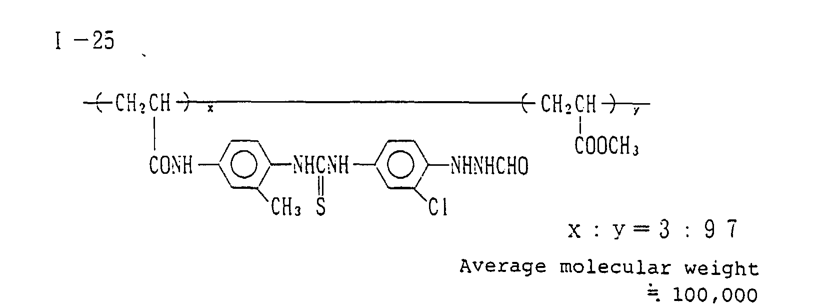

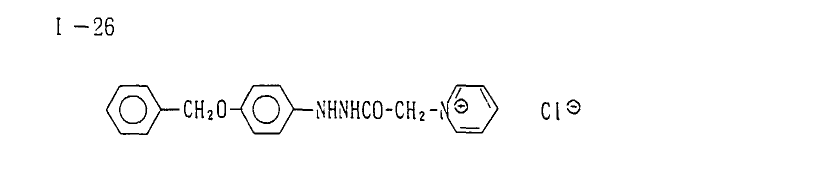

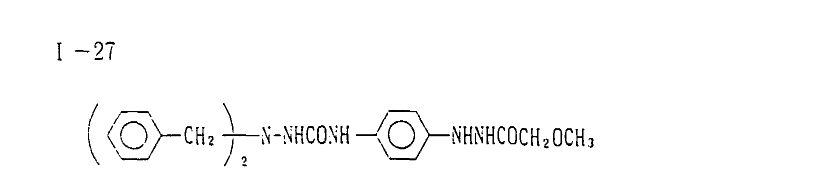

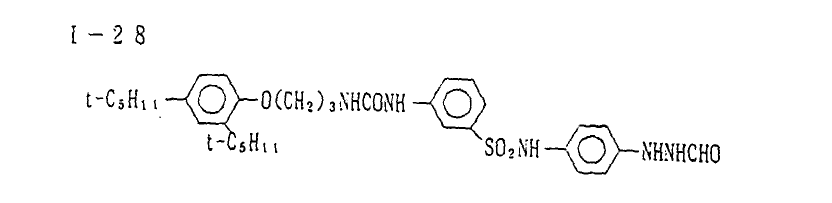

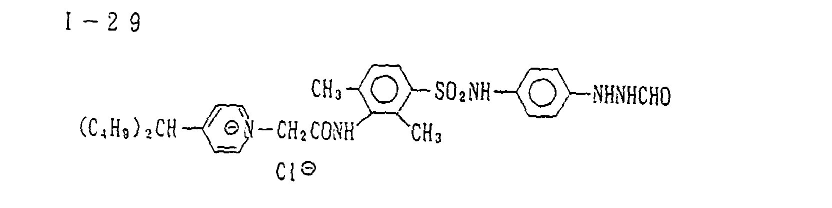

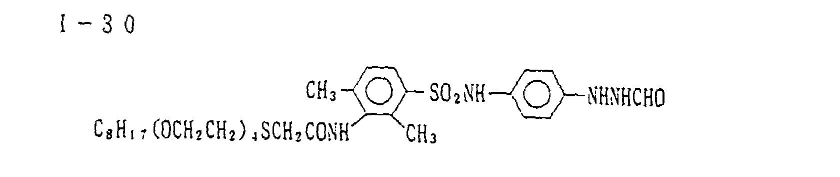

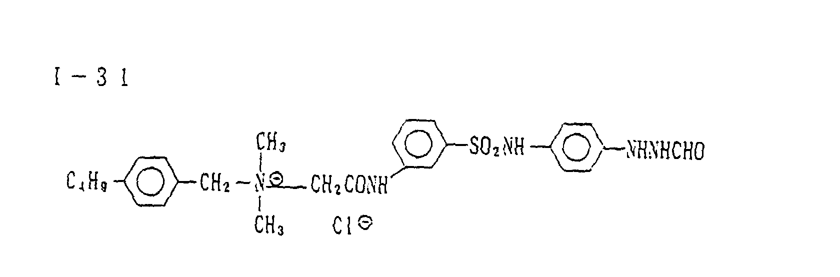

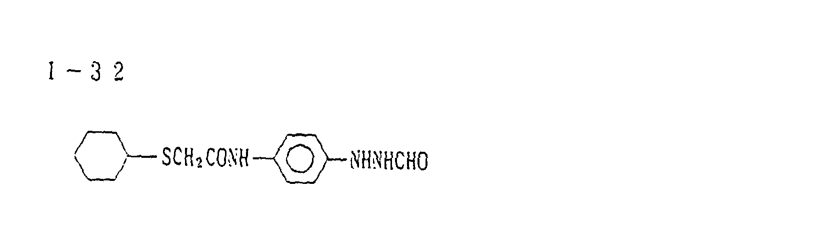

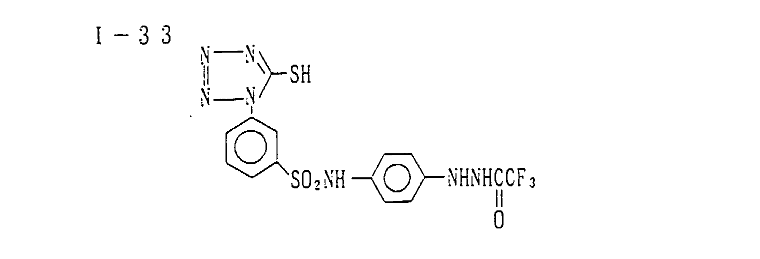

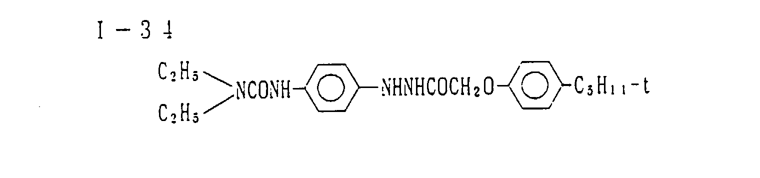

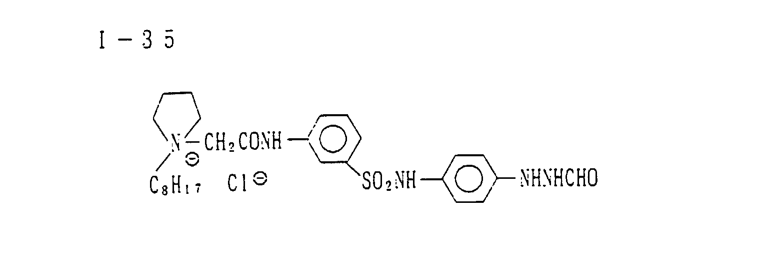

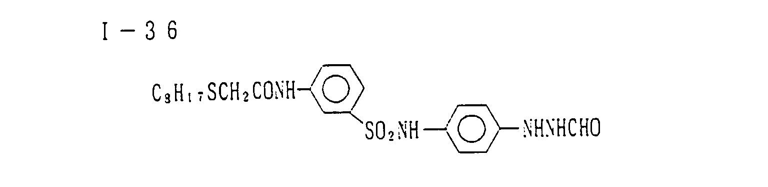

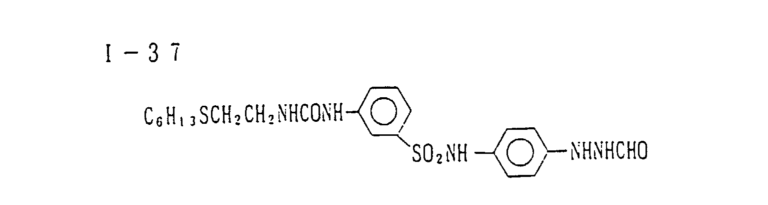

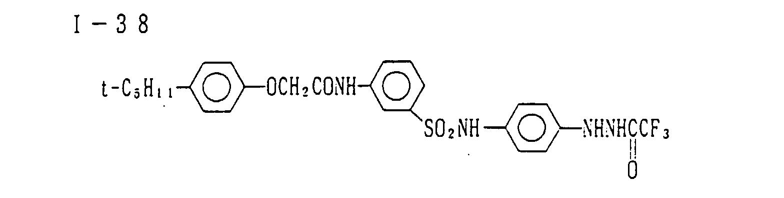

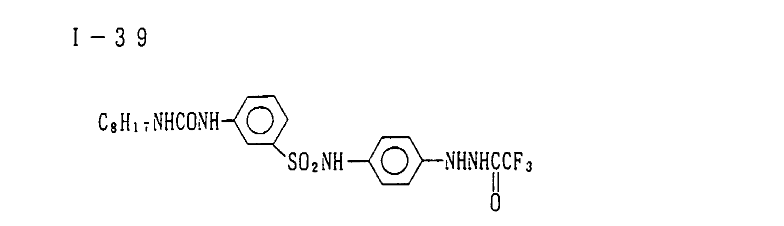

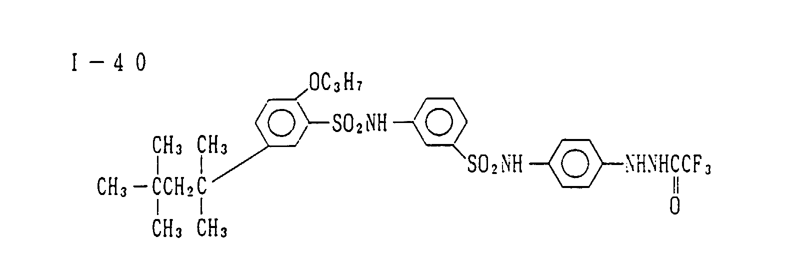

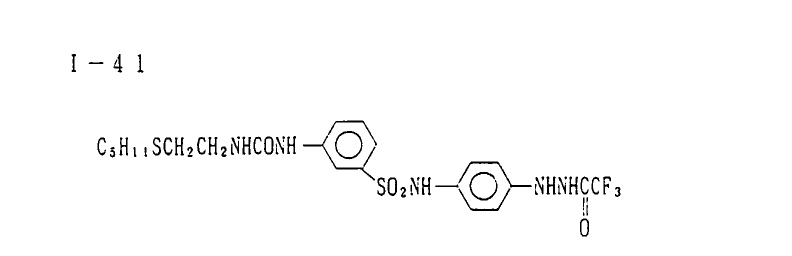

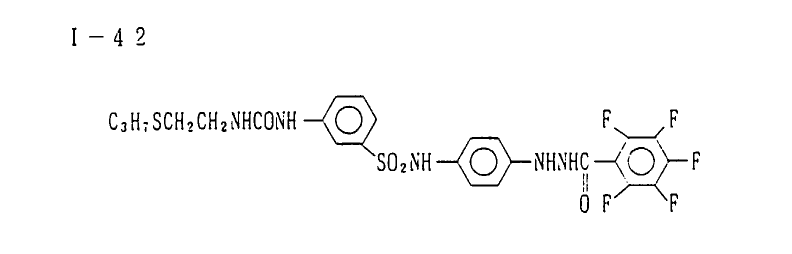

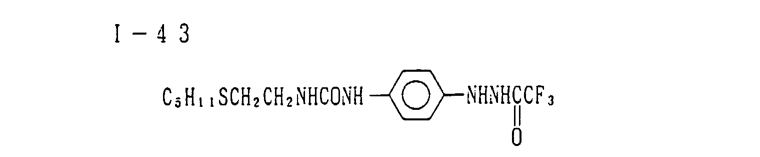

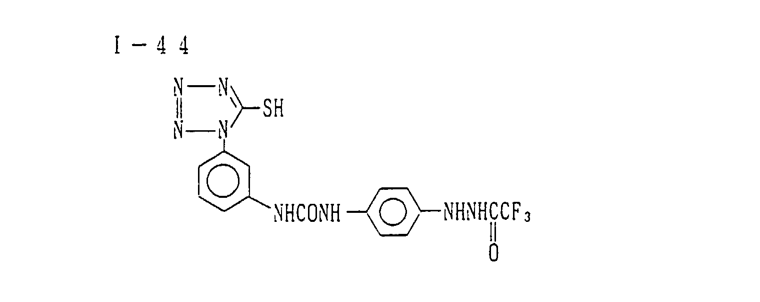

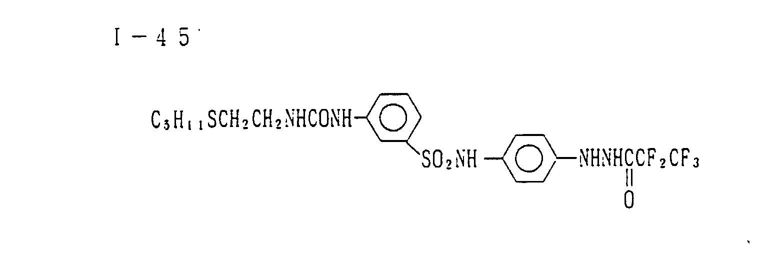

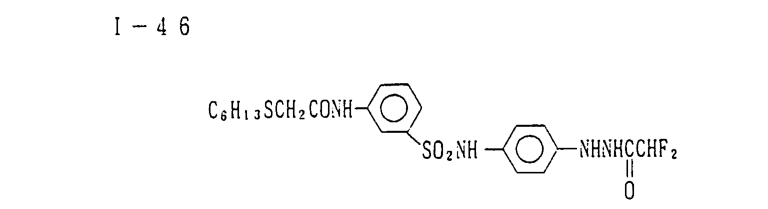

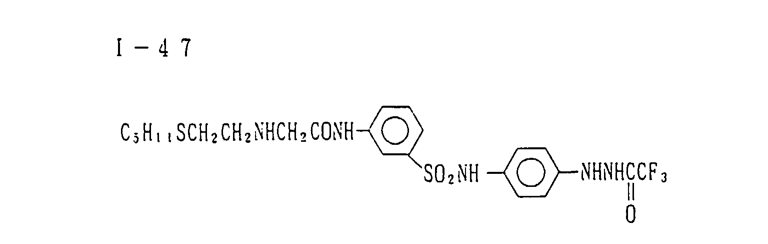

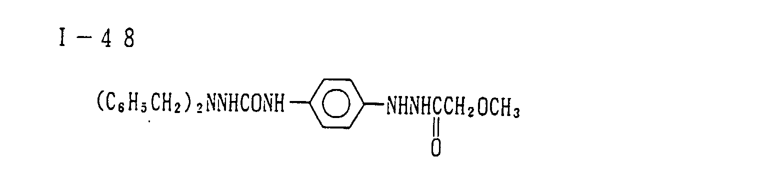

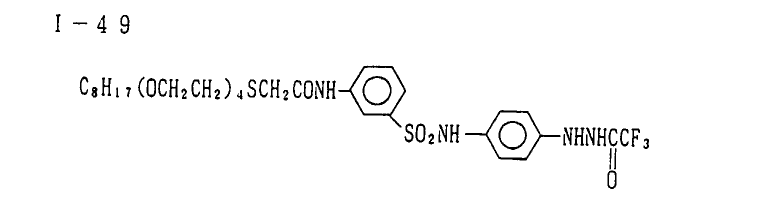

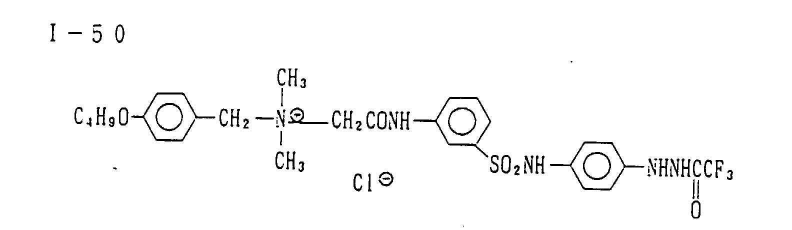

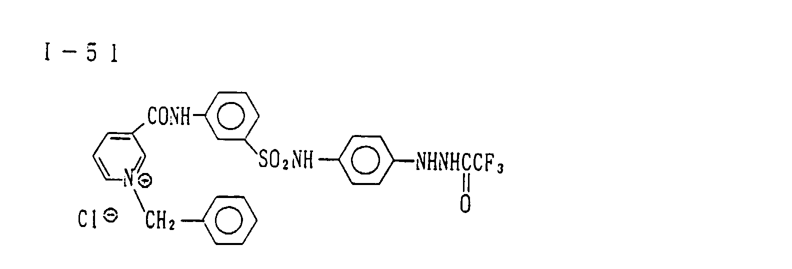

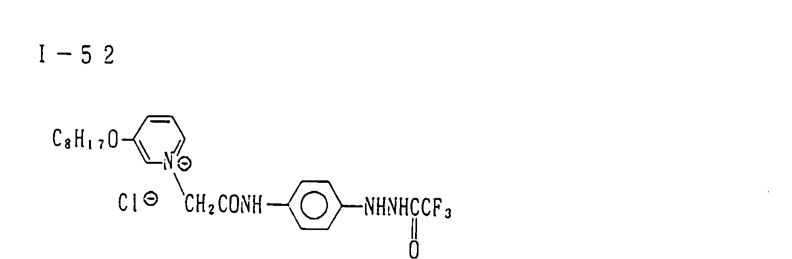

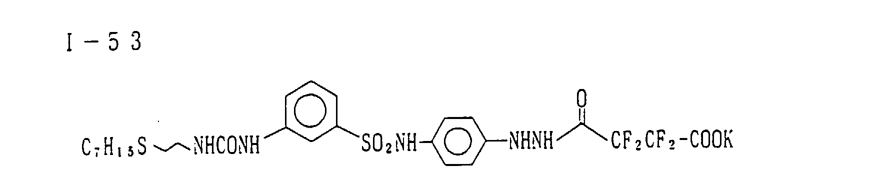

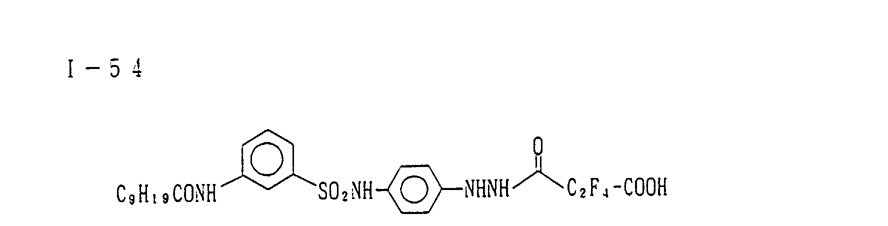

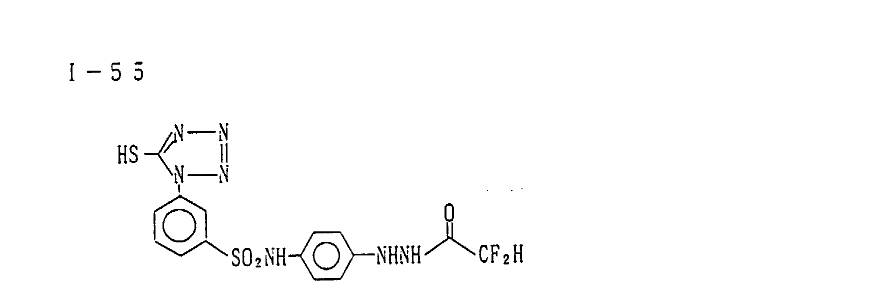

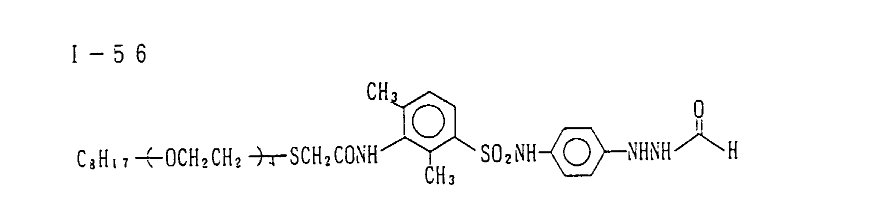

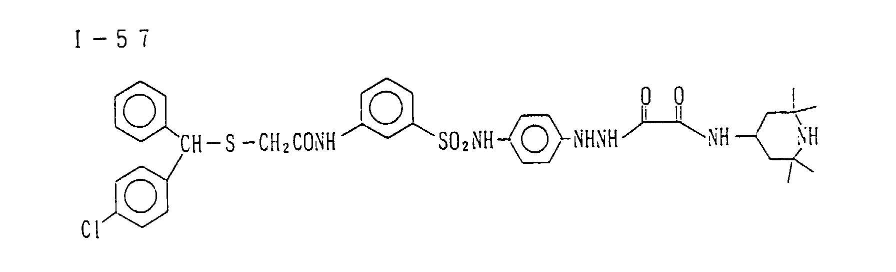

In addition to those described above, the hydrazine derivatives for use in the present invention include those described in Research Disclosure, Item 23516, p. 346 (November, 1983) and literatures cited therein, U.S. Patents 4,080,207, 4,269,929, 4,276,364, 4,278,748, 4,385,108, 4,459,347, 4,478,928, 4,560,638, 4,686,167, 4,912,016, 4,988,604, 4,994,365, 5,041,355 and 5,104,769, British Patent 2,011,391B, European Patents 217,310, 301,799 and 356,898, JP-A-60-179734, JP-A-61-170733, JP-A-61-270744, JP-A-62-178246, JP-A-62-270948, JP-A-63-29751, JP-A-63-32538, JP-A-63-104047, JP-A-63-121838, JP-A-63-129337, JP-A-63-223744, JP-A-63-234244, JP-A-63-234245, JP-A-63-234246, JP-A-63-294552, JP-A-63-306438, JP-A-64-10233, JP-A-1-90439, JP-A-1-100530, JP-A-1-105941, JP-A-1-105943, JP-A-1-276128, JP-A-1-280747, JP-A-1-283548, JP-A-1-283549, JP-A-1-285940, JP-A-2-2541, JP-A-2-77057, JP-A-2-139538, JP-A-2-196234, JP-A-2-196235, JP-A-2-198440, JP-A-2-198441, JP-A-2-198442, JP-A-2-220042, JP-A-2-221953, JP-A-2-221954, JP-A-2-285342, JP-A-2-285343, JP-A-2-289843, JP-A-2-302750, JP-A-2-304550, JP-A-3-37642, JP-A-3-54549, JP-A-3-125134, JP-A-3-184039, JP-A-3-240036, JP-A-3-240037, JP-A-3-259240, JP-A-3-280038, JP-A-3-282536, JP-A-4-51143, JP-A-4-56842, JP-A-4-84134, JP-A-2-230233, JP-A-4-96053, JP-A-4-216544, JP-A-5-45761, JP-A-5-45762, JP-A-5-45763, JP-A-5-45764, JP-A-5-45765 and JP-A-6-289524.

Further, in addition to those described above, examples thereof include the compound represented by (Chem. 1) of JP-B-6-77138, specifically, compounds described at pages 3 and 4 of the publication; the compound represented by formula (I) of JP-B-6-93082, specifically, Compounds 1 to 38 described at pages 8 to 18 of the publication; the compounds represented by formula (4), formula (5) and formula (6) of JP-A-6-230497, specifically, Compounds 4-1 to 4-10 described at pages 25 and 26, Compounds 5-1 to 5-42 described at pages 28 to 36 and Compounds 6-1 to 6-7 described at pages 39 and 40 of the publication; the compounds represented by formula (I) and formula (2) of JP-A-6-289520, specifically, Compounds 1-1) to 1-17) and 2-1) described at pages 5 to 7 of the publication; the compounds represented by (Chem. 2) and (Chem. 3) of JP-A-6-313936, specifically, compounds described at pages 6 to 19 of the publication; the compound represented by (Chem. 1) of JP-A-6-313951, specifically compounds described at pages 3 to 5 of the publication;, the compound represented by formula (I) of JP-A-7-5610, specifically, Compounds I-1 to I-38 described at pages 5 to 10 of the publication; the compound represented by formula (II) of JP-A-7-77783, specifically, Compounds II-1 to II-102 described at pages 10 to 27 of the publication; and the compounds represented by formula (H) and formula (Ha) of JP-A-7-104426, specifically, Compounds H-1 to H-44 described at pages 8 to 15 of the publication.

The addition amount of the hydrazine derivative to be used in the present invention is preferably from 1×10⁻⁶ to 1×10⁻¹ mol/mol-Ag, more preferably from 1×10⁻⁵ to 5×10⁻² mol/mol-Ag.

The hydrazine derivative to be used in the present invention may be dissolved in an appropriate organic solvent before use, such as alcohols (e.g., methanol, ethanol, propanol, fluorinated alcohol), ketones (e.g., acetone, methyl ethyl ketone), dimethylformamide, dimethylsulfoxide and methyl cellosolve.

Further, the hydrazine derivative to be used in the present invention may be dissolved by a well-known emulsion dispersion method using an oil such as dibutyl phthalate, tricresyl phosphate, glyceryl triacetate or diethyl phthalate, or an auxiliary solvent such as ethyl acetate or cyclohexanone, and an emulsion dispersion mechanically prepared and used. Alternatively, the hydrazine derivative powder may be dispersed in water by means of ball mill, colloid mill or ultrasonic wave according to a method known as a solid dispersion method.

In the present invention, the hydrazine derivative to be used in the present invention is preferably used in combination with an indazole (e.g., nitroindazole) as an antifoggant.

In the present invention, a nucleation accelerator such as an amine derivative, an onium salt compound, a disulfide derivative and a hydroxylamine derivative is preferably added in combination with the hydrazine derivative to the light-sensitive material.

Examples of the compound as a nucleation accelerator are set forth below.

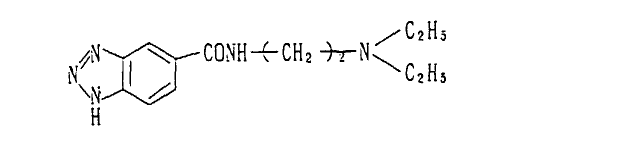

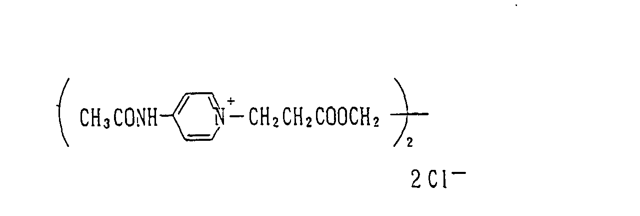

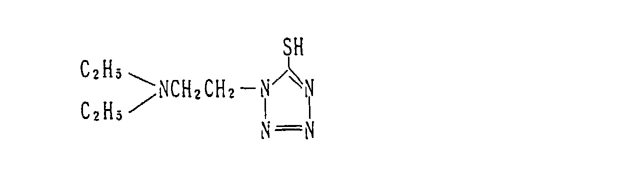

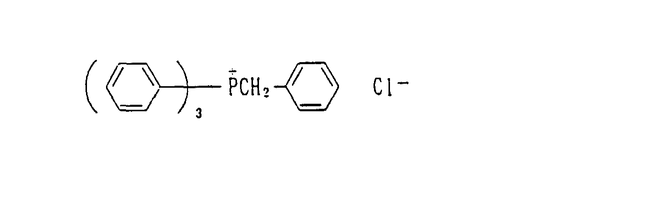

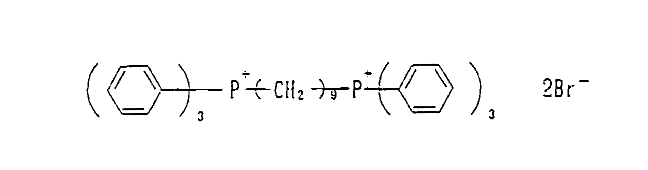

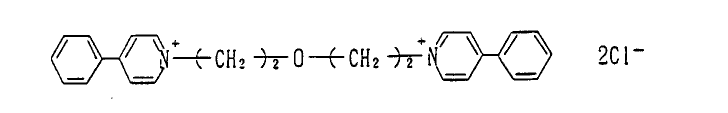

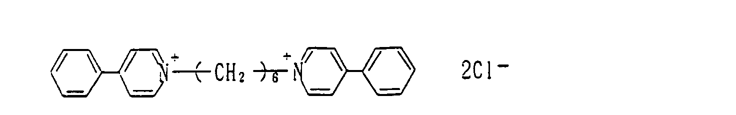

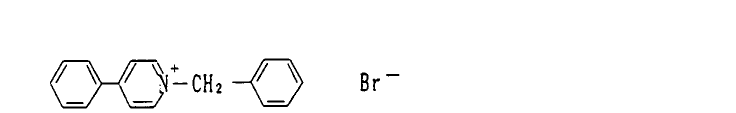

The addition amount of the nucleation accelerator of the present invention is preferably from 1×10⁻⁶ to 2×10⁻² mol/mol-Ag, more preferably from 1×10⁻⁵ to 2×10⁻² mol/mol-Ag, most preferably from 2×10⁻⁵ to 1×10⁻² mol/mol-Ag.

The heat-developable light-sensitive material of the present invention forms a photographic image using a heat developing method. The heat-developable light-sensitive material is disclosed in, as described above, for example, U.S. Patents 3,152,904 and 3,457,075 and D. Morgan and B. Shelly, "Thermally Processed Silver Systems", Imaging Processes and Materials, Neblette, 8th ed., compiled by Sturge, V. Walworth and A. Shepp, page 2 (1969).

According to the above references, the heat-developable light-sensitive material of the present invention preferably contains a developer.

Suitable examples of the developer are described in U.S. Patents 3,770,448, 3,773,512 and 3,593,863, and Research Disclosure Nos. 17029 and 29963, and include: aminohydroxycycloalkenone compounds (e.g., 2-hydroxypiperidino-2-cyclohexenone); esters of an amino reductone as a precursor of a developer (e.g., piperidinohexose reductone monoacetate); N-hydroxyurea derivatives (e.g., N-p-methylphenyl-N-hydroxyurea); hydrazones of aldehyde or ketone (e.g., anthracenealdehydephenyl hydrazone); phosphoramide-phenols; phophoramideanilines; polyhydroxybenzenes (e.g., hydroquinone, t-butylhydroquinone, isopropylhydroquinone and (2,5-dihydroxyphenyl)methylsulfone); sulfohydroxamic acids (e.g., benzenesulfohydroxamic acid); sulfonamidoanilines (e.g., 4-(N-methanesulfonamido)aniline); 2-tetrazolylthiohydroquinones (e.g., 2-methyl-5-(1-phenyl-5-tetrazolylthio)hydroquinone), tetrahydroquinoxalines (e.g., 1,2,3,4-tetrahydroquinoxaline); amidoxines; azines (e.g., combination of aliphatic carboxylic acid arylhydrazides and ascorbic acid); combinations of polyhydroxybenzene and hydroxylamine, reductone and/or hydrazine; hydroxamic acids; combinations of an azine and a sulfonamidophenol; α-cyanophenylacetic acid derivatives; combinations of bis-β-naphthol and a 1,3-dihydroxybenzene derivative; 5-pyrazolones; sulfonamidophenol reducing agents; 2-phenylindane-1,3-diones; chromans; 1,4-dihydropyridines (e.g., 2,6-dimethoxy-3,5-dicarboethoxy-1,4-dihydropyridine); bisphenols (e.g., bis(2-hydroxy-3-t-butyl-5-methylphenyl)-methane, bis(6-hydroxy-m-tri)mesitol, 2,2-bis(4-hydroxy-3-methylphenyl)propane, 4,5-ethylidene-bis(2-t-butyl-6-methyl)phenol); ultraviolet-sensitive ascorbic acid derivatives; and 3-pyrazolidones.

The developer suitable for achieving effects ascribable to the combination of a hydrazine derivative with silver halide containing a heavy metal ion or heavy metal complex ion, such as high contrast, high Dmax and high sensitivity, is a hindered phenol. This selection may be said very peculiar under circumstances that dihydroxybenzenes and ascorbic acids have been considered as the developer suitable for causing contrast and high sensitivity of a hydrazine derivative in the field of silver halide light-sensitive materials.

Examples of hindered phenols include the compound represented by the following formula (A): 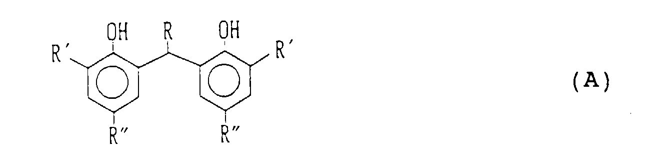 wherein R represents a hydrogen atom, an alkyl group having from 1 to 10 carbon atoms (e.g., -C₄H₉, 2,4,4-trimethylpentyl) and R' and R" each represents an alkyl group having from 1 to 5 carbon atoms (e.g., methyl, ethyl, t-butyl).

Specific examples of the compound represented by formula (A) are set forth below

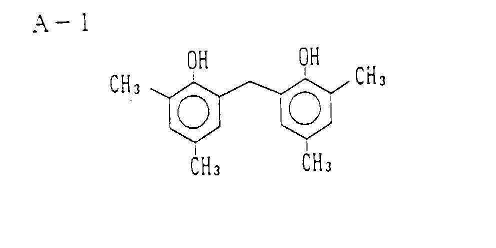

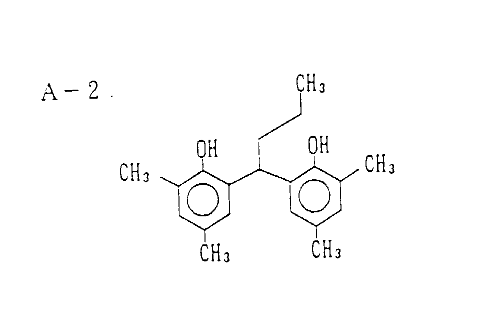

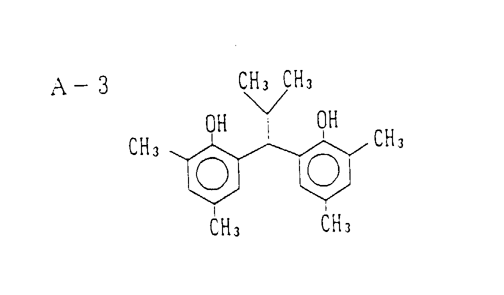

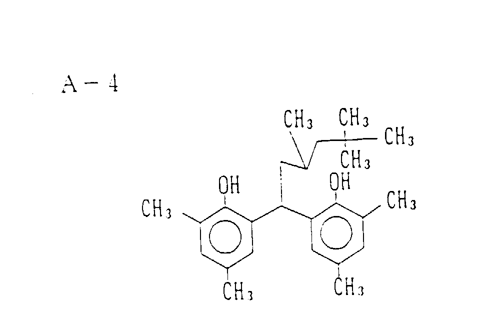

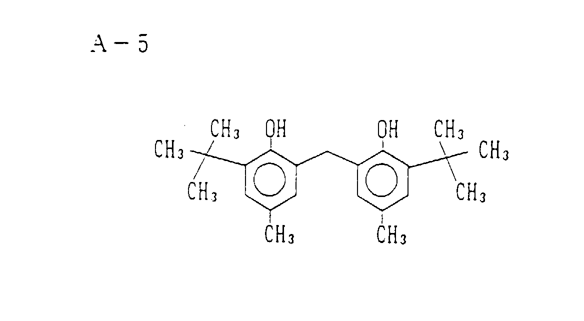

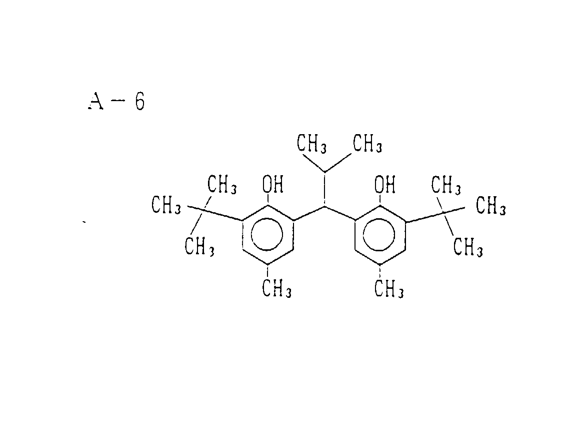

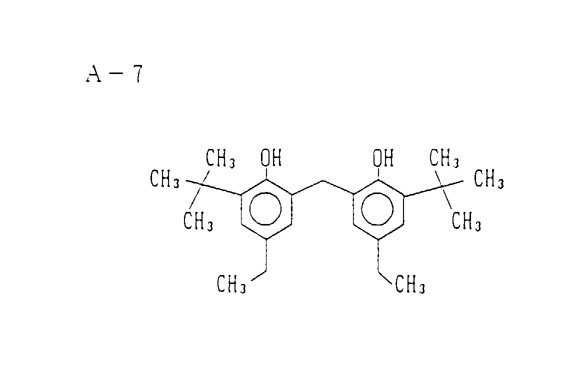

The use amount of the developer including the compound represented by formula (A) is preferably from 1×10⁻² to 10 mol/Ag-mol, more preferably from 1×10⁻² to 1.5 mol/Ag-mol.

In the present invention, the silver halide grain functions as a photosensor. In order to suppress muddying to white after image formation to a low level and to obtain a good image quality, the average grain size is preferably small, and the average grain size is preferably 0.20 µm or less, more preferably from 0.03 to 0.15 µm, still more preferably from 0.03 to 0.11 µm. The term "grain size" as used herein means, in the case where the silver halide grain is a so-called regular crystal such as cubic or octahedral form, the length of an edge, and in the case when the grain is not a regular crystal, such as spherical, stick and tabular form, the diameter of a sphere having the same volume of a silver halide grain.

The silver halide grain form is not particularly limited, however, the occupation ratio of Miller indices [100] faces is preferably high and it is preferably 50% or more, more preferably 70% or more, still more preferably 80% or more. The proportion of Miller indices [100] faces can be obtained according to T. Tani, J. Imaging Sci., 29, 165 (1985) using the adsorption dependency of [111] faces and [100] faces due to adsorption of a sensitizing dye.

The halogen composition is not particularly limited and any of silver chloride, silver chlorobromide, silver chloroiodobromide, silver bromide, silver iodobromide and silver iodide may be used. Silver bromide and silver iodobromide are preferred.

The photographic emulsion for use in the present invention may be prepared according to the method described in P. Glafkides, Chimie et Physique Photographique, Paul Montel (1967), G.F. Duffin, Photographic Emulsion chemistry, The Focal Press (1966), and V.L. Zelikman et al, Making and Coating Photographic Emulsion, The Focal Press (1964). More specifically, any of an acid process, a neutral process and ammonia process may be used and the reaction of a soluble silver salt with a soluble halogen salt may be performed using any of a single jet method, a double jet method and a combination thereof.

The silver halide may be added to an image forming layer (light-sensitive layer) by any method and in this case, the silver halide is positioned to come closer to the silver salt capable of reduction.

The silver halide may also be prepared by converting a part or whole of silver in an organic acid silver upon reaction of an organic acid silver with a halogen ion, or silver halide may be previously prepared and then added to a solution for use in preparing an organic acid silver. These methods may also be used in combination. Among these two methods, the latter is preferred.

In general, silver halide is preferably incorporated in an amount of from 0.75 to 30 wt% based on the silver source capable of reduction (organic acid silver).

The silver halide grain for use in the present invention contains an ion or complex ion of a metal selected from Mn, Fe, Co, Ni, Re and Os. One kind of metal ion or metal complex ion may be used or the same kind of metals or different kinds of metals may be used in combination of two or more thereof.

The content of the above-described metal ion or metal complex ion is generally suitably from 1×10⁻⁹ to 1×10⁻² mol, preferably from 1×10⁻⁸ to 1×10⁻⁴ mol, per mol of silver halide.

The compound which provides the metal ion or metal complex ion is preferably added upon formation of silver halide grains to be integrated into a silver halide grain. The compound may be added at any stage during preparation of silver halide grains, such as before or after nucleation, growth, physical ripening or chemical sensitization, however, it is preferably added at the stage of nucleation, growth or physical ripening, more preferably at the stage of nucleation or growth, and most preferably at the nucleation. The compound may be added by parts over several times, may be uniformly incorporated into silver halide grains, or as described in JP-A-63-29603, JP-A-2-306236, JP-A-3-167545, JP-A-4-76534, JP-A-6-110146 or JP-A-5-273683, may be incorporated to have a distribution within a grain. The compound is preferably incorporated into a grain to have a distribution therein.

The above-described metal compound may be added after dissolving it in water or an appropriate organic solvent (e.g., alcohols, ethers, glycols, ketones, esters, amides). Examples of the addition include a method of adding an aqueous solution where an aqueous solution of metal compound powder or a metal compound is dissolved together with NaCl or KCl, to a water-soluble silver salt solution or water-soluble halide solution during the grain formation, a method of adding the aqueous solution as a third aqueous solution upon double jetting of a silver salt solution and a halide solution to prepare silver halide grains by a simultaneous mixing method of three solutions, a method of pouring an aqueous solution of a metal compound in a necessary amount into a reaction vessel during the grain formation, or a method of adding and dissolving silver halide grains separately doped in advance with metal ions or metal complex ions, at the time of preparation of silver halide. Among these, preferred is a method of adding an aqueous solution where an aqueous solution of metal compound powder or a metal compound are dissolved together with NaCl or KCl, to a water-soluble halide solution.

In the case of adding to a grain surface, an aqueous solution of a metal compound may be poured in a necessary amount into a reaction vessel immediately after the grain formation, during or after completion of the physical ripening or at the time of chemical ripening.

The rhenium or osmium compound is added in the form of a water-soluble complex salt described in EP0336689A, EP0336427A1, EP0336425A1, EP0336426A1, JP-A-63-2042, JP-A-1-285941, and JP-A-2-20855. Particularly preferred examples of the complex salt of rhenium or osmium include six-coordinate complexes represented by the following formula:

[ML₆]ⁿ⁻

wherein M represents Re or Os; n represents 0, 1, 2, 3 or 4; and L represents a ligand and examples of preferred ligands include a halide ligand, a cyanide ligand, a cyan oxide ligand, a nitrosyl ligand and a thionitrosyl ligand. In this case, the counter ion is of no importance and an ammonium or alkali metal ion may be used.

Specific examples of the complex for use in the present invention are set forth below.

| | | |
|---|---|---|
| [ReCl₆]³⁻ | [ReBr₆]³⁻ | [ReCl₅(NO)]²⁻ |
| [Re(NS)Br₅]²⁻ | [Re(NO)(CN)₅]²⁻ | [Re(O)₂(CN)₄]³⁻ |
| [OsCl₆]³⁻ | [OsCl₅(NO)]²⁻ | [Os(NO)(CN)₅]²⁻ |
| [Os(NS)Br₅]²⁻ | [Os(CN)₆]⁴⁻ | [Os(O)₂(CN)₄]⁴⁻ |

As the cobalt compound, various compounds may be used and hexacyano complexes are particularly preferred. Examples thereof include [Co(CN)₆]³⁻ (the counter ion is not so important, but for example, an ammonium or alkali metal ion may be used).

The iron compound is a divalent or trivalent water-soluble iron ion-containing compound and specific examples thereof include ferrous arsenate, ferrous bromide, ferrous carbonate, ferrous chloride, ferrous citrate, ferrous fluoride, ferrous formate, ferrous gluconate, ferrous hydroxide, ferrous iodide, ferrous lactate, ferrous oxalate, ferrous phosphate, ferrous succinate, ferrous sulfate, ferrous thiocyanate, ferrous nitrate, ammonium ferrous nitrate, basic ferric acetate, ferric albuminate, ammonium ferric acetate, ferric bromide, ferric chloride, ferric chlorate, ferric citrate, ferric fluoride, ferric formate, ferric glycerophosphate, ferric hydroxide, acidic ferric phosphate, ferric nitrate, ferric phosphate, ferric pyrophosphate, sodium ferric pyrophosphate, ferric thiocyanide, ferric sulfate, ammonium ferric sulfate, guanidine ferric sulfate, ammonium ferric citrate, potassium hexanecyanoferrate(II), potassium pentacyanoammineferrate(II), sodium ethylenedinitrilotetraacetatoferrate(II), potassium hexacyanoferrate(III), tris(dipyridyl)ferric chloride, potassium pentacyanonitrosylferrate(III) and hexacyanoferric chloride. Among these, hexacyanoferrate(II) and hexacyanoferrate(III) provide outstanding effects.

The heat-developable light-sensitive material of the present invention may be sufficient if it uses a heat development processing and forms a photographic image, however, it is preferably a heat-developable light-sensitive material containing a silver source (organic acid silver) capable of reduction, a catalytically active amount of silver halide, a hydrazine derivative, a developer and, if desired, a color toner for controlling the tone of silver, which are usually dispersed in an (organic) binder matrix. The heat-developable light-sensitive material of the present invention is stable at room temperature but upon heating after exposure at a high temperature (e.g., 80°C or higher), it is developed. The heating causes oxidation-reduction reaction between an organic acid silver (functions as an oxidizing agent) and a developer to produce silver. The oxidation-reduction reaction is accelerated by the catalytic action of a latent image generated on silver halide upon exposure. The silver produced by the reaction of an organic acid silver in the exposure region provides a black image and forms a contrast to the non-exposure region to form an image. This reaction process proceeds without any supply of a processing solution such as water from the exterior.

The heat-developable light-sensitive material of the present invention has at least one light-sensitive layer on a support. On the support, only light-sensitive layers may be formed, however, it is preferred to provide at least one light-insensitive layer on a light-sensitive layer.

In order to control the quantity of light transmitting through the light-sensitive layer or the wavelength distribution, a filter layer may be formed on the same side as or the opposite side to the light-sensitive layer, or a dye or pigment may be incorporated into the light-sensitive material. Preferred examples of the dye include compounds described in Japanese Patent Application No. 7-11184.

A plurality of light-sensitive layers may be provided or in order to control the gradation, the sensitivity thereof may be arranged in the order of a high-sensitive layer/a low-sensitive layer or a low-sensitive layer/a high-sensitive layer.

Various additives may be added to any of light-sensitive layers, light-insensitive layers or other constituent layers.

In the heat-developable light-sensitive material of the present invention, for example, a surface active agent, an antioxidant, a stabilizer, a plasticizer, an ultraviolet absorbent or a coating aid may be used.

The binder is suitably transparent or translucent and usually colorless. Examples thereof include natural polymer synthetic resins, polymers and copolymers, and other media capable of forming film such as gelatin, gum arabic, poly(vinyl alcohol), hydroxyethyl cellulose, cellulose acetate, cellulose acetate butylate, poly(vinyl pyrrolidone), casein, starch, poly(acrylate), poly(methyl methacrylate), poly(vinyl chloride), poly(methacrylate), copoly(styrene-maleic anhydride), copoly(styrene-acrylonitrile), copoly(styrene-butadiene), poly(vinyl acetals) (e.g., poly(vinyl formal), poly(vinyl butyral)), poly(esters), poly(urethanes), phenoxy resin, poly(vinylidene chloride), poly(epoxide), poly(carbonate), poly(vinyl acetate), cellulose esters and poly(amide). The binder may be dissolved in water or an organic solvent and coated as an emulsion.

A color toner is very preferably added. Examples of suitable color toners are disclosed in Research Disclosure, No. 17029 and include: imides (e.g., phthalimide); cyclic imides, pyrazolin-5-ones and quinazoline (e.g., succinimide, 3-phenyl-2-pyrazolin-5-one, 1-phenylurazole, quinazoline, 2,4-thiazolidinedione); naphthalimides (e.g., N-hydroxy-1,8-naphthalimide); cobalt complexes (e.g., hexaminetrifluoroacetate of cobalt), mercaptanes (e.g., 3-mercapto-1,2,4-triazole); N-(aminomethyl)aryldicarboxyimides (e.g., N-(dimethylaminomethyl)phthalimide); blocked pyrazoles, isothiuronium derivatives and combinations thereof with a certain kind of photobleaching agents (e.g., combination of N,N'-hexamethylene(1-carbamoyl-3,5-dimethylpyrazole), 1,8-(3,6-dioxaoctane)bis(isothiuroniumtrifluoroacetate) and 2-(tribromomethylsulfonyl)benzothiazole); merocyanine dyes (e.g., 3-ethyl-5-((3-ethyl-2-benzothiazolinylidene)-1-methyl-ethylidene)-2-thio-2,4-oxazolidinedione)); phthalazinone, phthalazinone derivatives and metal salts of the derivative (e.g., 4-(1-naphthyl)phthalazinone, 6-chlorophthalazinone, 5,7-dimethyloxyphthalazinone, 2,3-dihydro-1,4-phthalazinedione); combinations of phthalazinone with a sulfinic acid derivative (e.g., 6-chlorophthalazinone + sodium benzenesulfinate or 8-methylphthalazinone + sodium p-trisulfonate); combinations of phthalazine + phthalic acid; combinations of phthalazine (including phthalazine adducts) with maleic anhydride and at least one compound selected from phthalic acid, 2,3-naphthalenedicarboxylic acid o-phenylene acid derivative and an anhydride thereof (e.g., phthalic acid, 4-methylphthalic acid, 4-nitrophthalic acid, tetrachlorophthalic anhydride); quinazolinediones, benzoxazine and naphthoxazine derivatives; benzoxazine-2,4-diones (e.g., 1,3-benzoxazine-2,4-dione); pyrimidines and asymmetric triazines (e.g., 2,4-dihydroxpyrimidine), and tetrazapentalene derivatives (e.g., 3,6-dimercapto-1,4-diphenyl-1H,4H-2,3a,5,6a-tetrazapentalene).

The color toner is preferably phthalazone.

The silver source capable of reduction is preferably a silver salt of an organic or heteroorganic acid containing a silver ion source capable of reduction, more preferably an aliphatic carboxylic acid having a long chain (having from 10 to 30, preferably from 15 to 25 carbon atoms). Organic or inorganic silver salt complexes having an overall stability constant of the ligand to the silver ion of from 4.0 to 10.0 are also useful. Examples of suitable silver salts are described in Research Disclosure, No. 17029 and No. 29963 and include: salts of an organic acid (e.g., gallic acid, oxalic acid, behenic acid, stearic acid, palmitic acid, lauric acid); carboxyalkylthiourea salts of silver (e.g., 1-(3-carboxypropyl)thiourea, 1-(3-carboxypropyl)-3,3-dimethylthiourea); silver complexes as a polymer reaction product of aldehyde with a hydroxy-substituted aromatic carboxylic acid (for example, aldehydes (e.g., formaldehyde, acetaldehyde, butylaldehyde), hydroxy-substituted acids (e.g., salicylic acid, 3,5-dihydroxybenzoic acid, 5,5-thiodisalicylic acid), silver salts and complexes of thioenes (e.g., 3-(2-carboxyethyl)-4-hydroxymethyl-4-thiazoline-2-thioene, 3-carboxymethyl-4-thiazoline-2-thioene), and complexes and salts of silver with a nitrogen acid selected from imidazole, pyrazole, urazol, 1,2,4-thiazole, 1H-tetrazole, 3-amino-5-benzylthio-1,2,4-triazole and benzotriazole); silver salts of saccharine or 5-chlorosalicylaldoxime; and silver salts of mercaptides. The silver salt is preferably silver behenate. The silver source capable of reduction is used in an amount of, in terms of silver, preferably 3 g/m² or less, more preferably 2 g/m² or less.

The light-sensitive material may contain an antifoggant. The most effective antifoggant has been a mercury ion. The use of a mercury compound as an antifoggant in the light-sensitive material is disclosed in, for example, U.S. Patent 3,589,903. However, the mercury compound is not preferred in view of environmental issue. As the non-mercury antifoggant, antifoggants disclosed in U.S. Patents 4,546,075 and 4,452,885 and JP-A-59-57234 are preferably used.

Particularly preferred examples of the non-mercury antifoggant include compounds disclosed in U.S. Patents 3,874,946 and 4,756,999, specifically, the heterocyclic compound having one or more substituents represented by the formula: -C(X¹)(X²)(X³) (wherein X¹ and X² each represents a halogen (e.g., F, Cl, Br, I) and X³ represents hydrogen or halogen). Examples of suitable antifoggants include the following compounds:

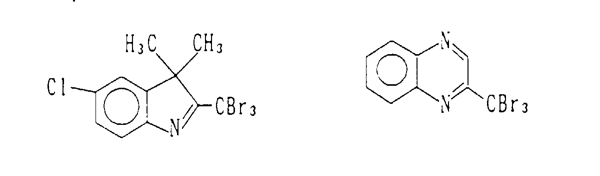

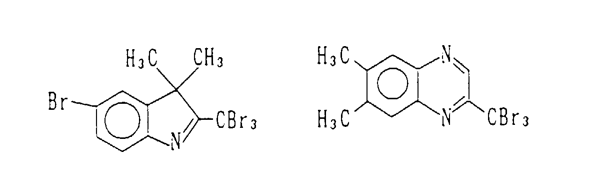

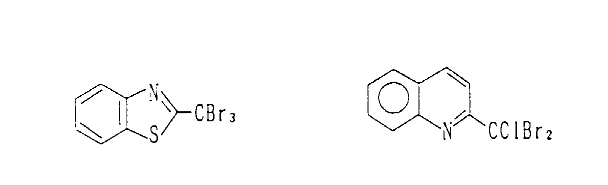

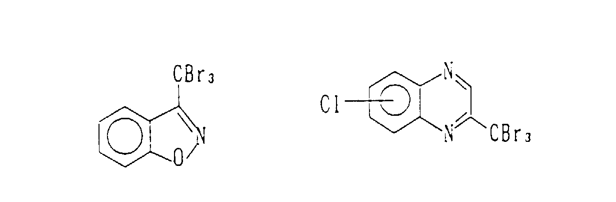

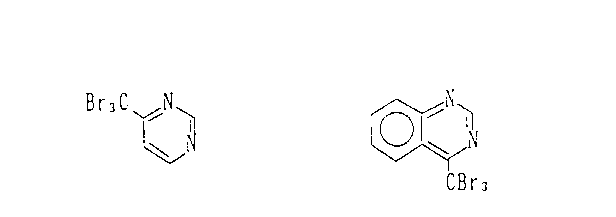

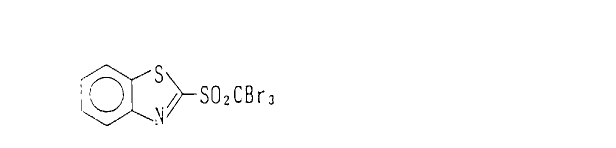

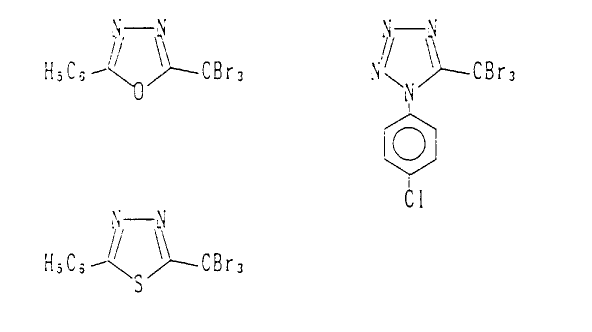

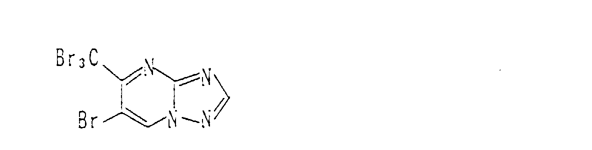

Examples of more suitable antifoggants are disclosed in U.S. Patents 5,028,523, 5,374,514 and 5,460,938.

In the heat-developable light-sensitive material of the present invention, sensitizing dyes described in, for example, JP-A-63-159841, JP-A-60-140335, JP-A-63-231437, JP-A-63-259651, JP-A-63-304242, JP-A-63-15245, U.S. Patents 4,639,414, 4,740,455, 4,741,966, 4,751,175 and 4,835,096 may be used.

Examples of useful sensitizing dyes for use in the present invention are cited or described in Research Disclosure, Item 17643 IV-A, page 23 (December, 1978), and ibid., Item 1831X, page 437 (August, 1978).

In particular, sensitizing dyes having spectral sensitivity suitable for spectral characteristics of various scanner light sources may be advantageously selected.

For example,
A) for an argon laser light source, simple merocyanines described in JP-A-60-162247, JP-A-2-48653, U.S. Patent 2,161,331, West German Patent 936,071 and JP-A-5-11389;
B) for a helium-neon laser light source, trinuclear cyanine dyes described in JP-A-50-62425, JP-A-54-18726 and JP-A-59-102229 and merocyanines described in JP-A-7-287338;
C) for an LED light source or a red semiconductor laser, thiacarbocyanines described in JP-B-48-42172, JP-B-51-9609, JP-B-55-39818, JP-A-62-284343 and JP-A-2-105135; and
D) for an infrared semiconductor laser light source, tricarbocyanines described in JP-A-59-191032 and JP-A-60-80841, and dicarbocyanines containing a 4-quinoline nucleus represented by formula (IIIa) and formula (IIIb) of JP-A-59-192242 and JP-A-3-67242, may be advantageously selected.

These sensitizing dyes may be used individually or in combination thereof, and the combination of sensitizing dyes is often used for the purpose of supersensitization. Together with the sensitizing dye, a dye which itself has no spectral sensitization action or a substance which absorbs substantially no visible light, but which exhibits supersensitization, may be incorporated into the emulsion.

The heat-developable light-sensitive material of the present invention is exposed preferably to an Ar laser (488 nm), a He-Ne laser (633 nm), a red semiconductor layer (670 nm) or an infrared semiconductor layer (780 nm, 830 nm).

The heat-developable light-sensitive material of the present invention may have a dye-containing layer as an antihalation layer. In the case of exposure to an Ar laser, a He-Ne laser or a red semiconductor laser, a dye showing absorption of at least 0.3 or more, preferably 0.8 or more at the exposure wavelength in the range of from 400 to 750 nm is added. In the case of exposure to an infrared semiconductor layer, a dye showing an absorption of at least 0.3 or more, preferably 0.8 or more at the exposure wavelength in the range of from 750 to 1,500 nm is added. A sole dye may be used or a plurality of dyes may be used in combination.

The dye may be added to a dye layer closer to the support on the same side as the light-sensitive layer or may be added to a dye layer on the opposite side to the light-sensitive layer.

The support for use in the present invention may be paper, synthetic paper, paper laminated with a synthetic resin (e.g., polyethylene, polypropylene, polystyrene), plastic film (e.g., polyethylene terephthalate, polycarbonate, polyimide, nylon, cellulose triacetate), a metal plate (e.g., aluminum, aluminum alloy, zinc, iron, copper), or paper or plastic film laminated or evaporated with the above-described metal.

The plastic film is stretched or shrinks in the film dimension upon passing through a heat developing machine. When the heat-developable light-sensitive material is used as a printing light-sensitive material and precision multicolor printing is performed, this stretching/shrinking causes a serious problem. Accordingly, the film for use in the present invention is preferably reduced in the dimensional change. Examples of the film include a styrene-base polymer having a syndiotactic structure or a heat-treated polyethylene. Those having a high glass transition temperature are also preferably used and polyether ethyl ketone, polystyrene, polysulfone, polyether sulfone or polyarylate may be used.

The present invention is described in greater detail below with reference to the Examples, however, the present invention should not be construed as being limited thereto.

### EXAMPLE 1

### Preparation of Silver Halide Grain A

Into 900 ml of water, 7.5 g of inert gelatin and 10 mg of potassium bromide were dissolved, the temperature and the pH were adjusted to 35°C and 3.0, respectively, and thereto, 370 ml of an aqueous solution containing 74 g of silver nitrate and an aqueous solution containing potassium bromide and potassium iodide at a molar ratio of 96/4 were added while keeping the pAg of 7.7 by a controlled double jet method over 10 minutes. Thereafter, 0.3 g of 4-hydroxy-6-methyl-1,3,3a,7-tetrazaindene was added and the pH was adjusted to 5 with NaOH to obtain cubic silver iodobromide grains having an average grain size of 0.06 µm, a coefficient of variation of the projected diameter area of 8% and a [100] face ratio of 87%.

The emulsion was coagulated and precipitated using a gelatin coagulant and after desalting, 0.1 g of phenoxyethanol was added thereto, and the pH and the pAg were adjusted to 5.9 and 7.5, respectively.

### Preparation of Silver Halide Grains B, C, D, E, F, G and H

Silver Halide Grains B, C, D, E, F, G and H were prepared thoroughly in the same manner as Silver Halide Grain A except for adding a heavy metal as shown in Table 1 at the same time with the addition of silver nitrate over 5 minutes in the preparation of Silver Halide Grain A.

**TABLE 1**

| Silver Halide Grain | Heavy Metal | Addition Amount (mol/Ag-mol) |
|---|---|---|
| A | - | - |
| B | [Fe(CN)₆]⁴⁻ | 3×10⁻⁵ |
| C | [Rh(H₂O)Cl₅]²⁻ | 5×10⁻⁶ |
| D | [IrCl₆]³⁻ | 5×10⁻⁶ |
| E | [RuCl₅(NO)]²⁻ | 5×10⁻⁶ |
| F | [Re(NO)Cl₅]²⁻ | 5×10⁻⁶ |
| G | [OsCl₅(NO)]²⁻ | 5×10⁻⁶ |
| H | [Co(CN)₆]³⁻ | 3×10⁻⁵ |

### Preparation of Light-Sensitive Emulsion A containing organic fatty acid silver

Into 300 ml of water, 10.6 g of behenic acid was added and dissolved under heating at 90°C and thereto, 31.1 ml of 1N sodium hydroxide was added while well stirring. The mixture was allowed to stand for one hour as it was. After cooling to 30°C, 7.0 ml of 1N phosphoric acid was added and thereto, 0.13 g of N-bromosuccinic acid imide was added while well stirring. Then, Silver Halide Grain A previously prepared was added to give a silver amount of 10 mol% to the behenic acid under heating at 40°C while stirring. Further, 25 ml of an aqueous solution of 1N silver nitrate was continuously added over 2 minutes and while continuing stirring, the mixture was allowed to stand for one hour.

While stirring the resulting aqueous mixture, 37 g of a 1.2 wt% n-butyl acetate solution of polyvinyl acetate was gradually added, water was removed after formation of a flock of dispersions, water washing and removal of water were further repeated twice, and then 20 g of a 1:2 mixed solution of a 2.5 wt% butyl acetate of polyvinyl butyral (average molecular weight: 3,000) and isopropyl alcohol was added while stirring. To the thus-obtained gel mixture of behenic acid and silver halide, 12.5 g of polyvinyl butyral (average molecular weight: 4,000) and 57 g of isopropyl alcohol were added to effect decomposition.

Light-Sensitive Emulsions B, C, D, E, F, G and H were prepared in the same manner except for changing the silver halide grain used to Silver Halide Grains B, C, D, E, F, G and H, respectively.

On a heat-treated polyethylene terephthalate support, the following layers were formed in sequence to prepare samples. The drying was performed at 75°C for 5 minutes in each case.

### Coating on Back Surface Side

A solution having the following composition was coated to have a wet thickness of 80 µm.

| | |
|---|---|
| Polyvinyl butyral (10% isopropanol solution) | 150 ml |
| Dye-B | 70 mg |
| Dye-C | 70 mg |

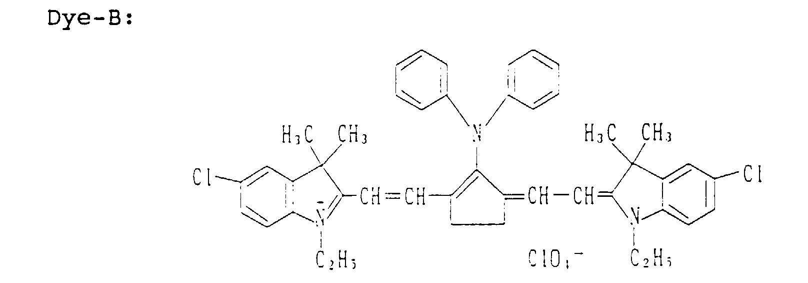

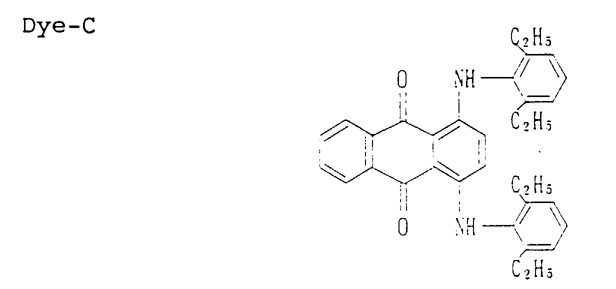

### Coating on Light-Sensitive Layer Side

### Light-Sensitive Layer 1:

A solution having the following composition was coated to give a coated silver amount of 2.0 g/m².

| | |
|---|---|
| Light-Sensitive Emulsion A | 73 g |
| Sensitizing Dye-1 (0.1% DMF solution) | 2 ml |
| Antifoggant-1 (0.01% methanol solution) | 3 ml |
| Antifoggant-2 (1.5% methanol solution) | 8 ml |
| Antifoggant-3 (2.4% DMF solution) | 5 ml |
| Phthalazone (4.5% DMF solution) | 8 ml |
| Developer-1 (10% acetone solution) | 13 ml |
| Hydrazine derivative (1% methanol/DMF = 4:1 solution, shown in Table 2) | 2 ml |

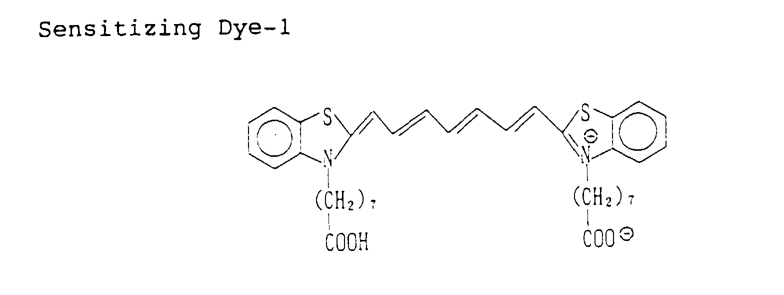

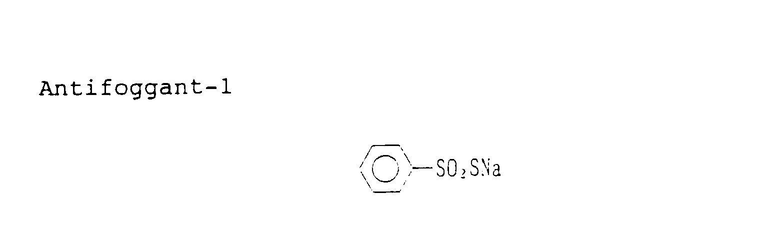

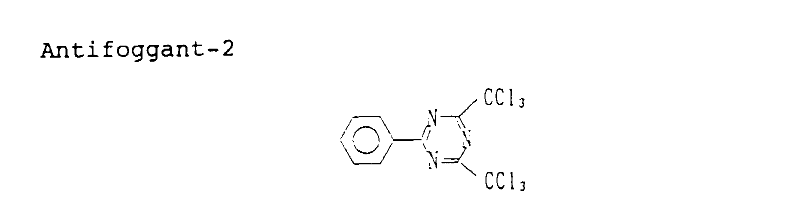

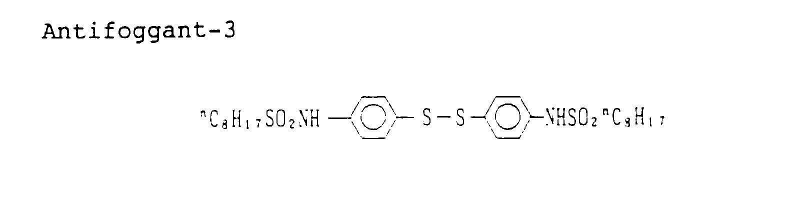

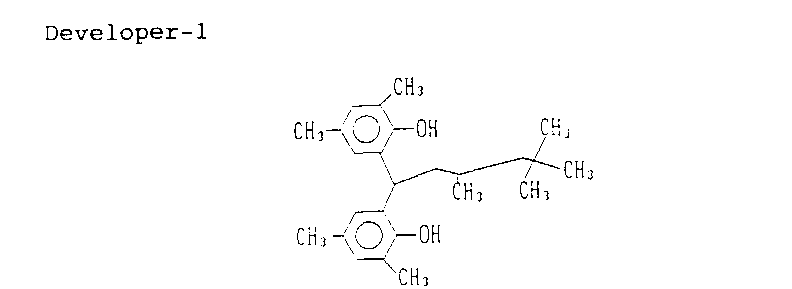

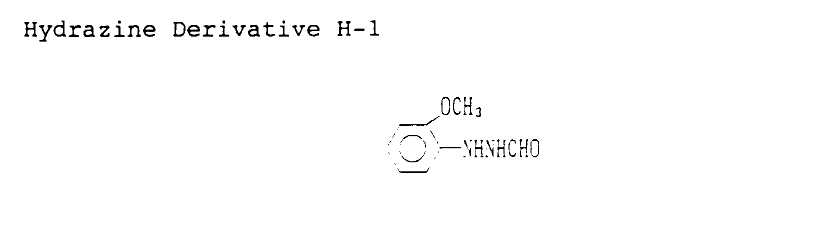

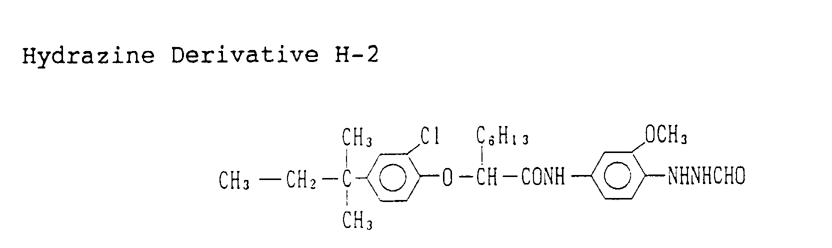

### Light-Sensitive Layer 2:

Light-Sensitive Layer 2 was formed in the same manner as Light-Sensitive Layer 1 except for changing Light-Sensitive Emulsion A of the above-described light-sensitive layer to Light-Sensitive Emulsion B. Light-Sensitive Layers 3 to 8:

Light-Sensitive Layers 3 to 8 were formed in the same manner as Light-Sensitive Layer 2 using Light-Sensitive Emulsions C to H, respectively. Surface Protective Layer:

A solution having the following composition was coated on each light-sensitive layer to have a wet thickness of 100 µm.

| | |
|---|---|
| Acetone | 175 ml |
| 2-Propanol | 40 ml |
| Methanol | 15 ml |
| Cellulose acetate | 8.0 g |
| Phthalazine | 1.0 g |
| 4-Methylphthalic acid | 0.72 g |
| Tetrachlorophthalic acid | 0.22 g |
| Tetrachlorophthalic anhydride | 0.5 g |

### Sensitometry

Each of the heat-developable light-sensitive materials prepared above was exposed to xenon flash light through an interference filter having a peak at 830 nm for a light emission time of 10⁻³ sec. Then, the materials were heat developed at 110°C for 15 seconds using a heat drum. The sensitivity was shown by a relative sensitivity to the sensitivity obtained as a reciprocal of an exposure amount necessary for giving a density of 3.0. On the characteristic curve, the gradient of a straight line drawn by connecting points of densities 0.3 and 3.0 was shown as a gradation (γ).

### Evaluation of Image Quality

Each of the heat-developable light-sensitive materials prepared above was exposed to a laser diode of 830 nm with laser beams being leaned 13° from the vertical plane. From the halftone dots generated, the image quality was evaluated. The evaluation was made by a five-point method such that taking the halftone dot quality obtained when a scanner film LS5500 produced by Fuji Photo Film Co., Ltd. was exposed using a color scanner MAGNASCAN manufactured by the same company, as Point 4, the quality superior thereto was Point 5 and inferior was Point 3, 2 or 1. The sharp cutting of dots was mainly evaluated. Samples evaluated as Point 3 or higher lie on a practicable level as a printing light-sensitive material.

**TABLE 2**

| Light-Sensitive Layer | Silver Halide | Hydrazine Derivative | Sensitivity | Dmax | γ | Image Quality | Remarks |
|---|---|---|---|---|---|---|---|
| 1 | A | - | 10 | 3.0 | 4 | 2 | Comparison |
| 1 | A | H-1 | 45 | 4.2 | 8 | 3 | Comparison |
| 2 | B | H-1 | 56 | 4.4 | 16 | 5 | Invention |
| 2 | B | H-2 | 50 | 4.3 | 16 | 5 | Invention |
| 3 | C | H-1 | 38 | 4.4 | 15 | 5 | Comparison |
| 3 | C | H-2 | 36 | 4.4 | 15 | 5 | Comparison |
| 4 | D | H-1 | 71 | 4.4 | 15 | 5 | Comparison |
| 4 | D | H-2 | 66 | 4.3 | 15 | 5 | Comparison |
| 5 | E | H-1 | 40 | 4.4 | 15 | 5 | Comparison |
| 6 | F | H-1 | 47 | 4.4 | 15 | 5 | Invention |
| 7 | G | H-1 | 48 | 4.4 | 15 | 5 | Invention |
| 8 | H | H-1 | 47 | 4.3 | 15 | 5 | Invention |

As seen from Table 2, samples of the present invention had both high sensitivity and high Dmax and were contrasty, and therefore, the image quality was very good. Further, samples using a developer of formula (A) provided good image quality.

### EXAMPLE 2

### Coating on Light-Sensitive Layer Side

### Light-Sensitive Layer:

Solutions for light-sensitive layers were prepared and coated in the same manner as in Example 1 except for changing the sensitizing dye to the following Sensitizing Dye-2 (0.1% DMF solution) and adding 2 ml of a hydrazine derivative (1% methanol/DMF = 4:1 solution) as shown in Table 3.

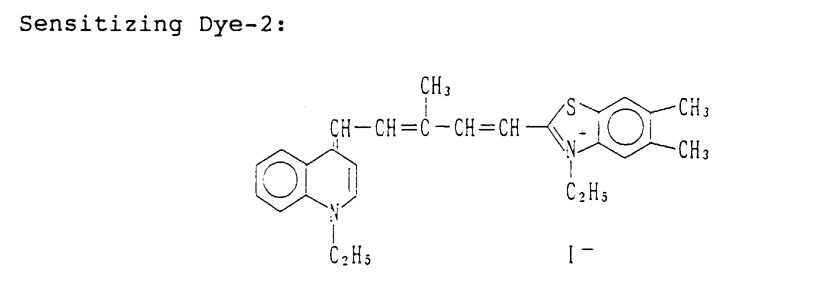

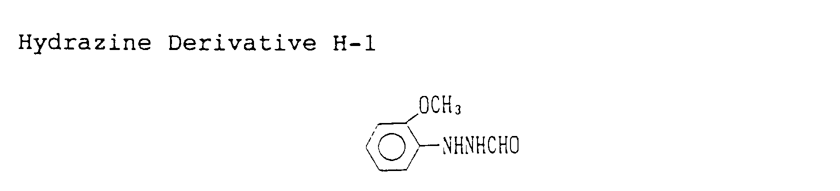

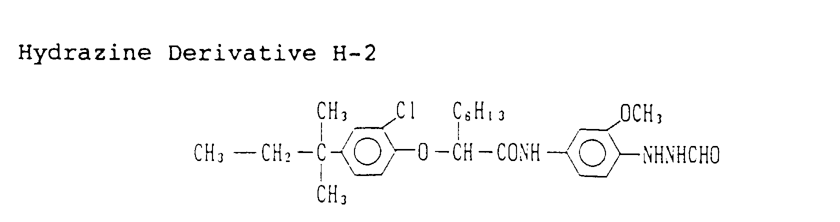

### Surface Protective layer:

Coated in the same manner as in Example 1

### Coating on Back Surface Side:

Coated in the same manner as in Example 1

### Sensitometry

The sensitometry was performed in the same manner as in Example 1 except that each of the heat-developable light-sensitive materials prepared above was exposed through an interference filter having a peak at 780 nm.

### Evaluation of Image Quality

The evaluation was performed in the same manner as in Example 1 except that each of the heat-developable light-sensitive materials prepared above was exposed to a laser diode of 780 nm.

**TABLE 3**

| Light-Sensitive Layer | Silver Halide | Hydrazine Derivative | Sensitivity | Dmax | γ | Image Quality | Remarks |
|---|---|---|---|---|---|---|---|
| 1 | A | - | 10 | 2.9 | 4 | 2 | Comparison |
| 1 | A | H-1 | 45 | 4.0 | 8 | 3 | Comparison |
| 2 | B | H-1 | 45 | 4.2 | 16 | 5 | Invention |
| 2 | B | H-2 | 45 | 4.0 | 16 | 5 | Invention |
| 3 | C | H-1 | 45 | 4.3 | 15 | 5 | Comparison |
| 3 | C | H-2 | 45 | 4.1 | 15 | 5 | Comparison |
| 4 | D | H-1 | 45 | 4.0 | 15 | 5 | Comparison |
| 5 | E | H-1 | 45 | 4.2 | 15 | 5 | Comparison |
| 6 | F | H-1 | 45 | 4.1 | 15 | 5 | Invention |
| 7 | G | H-1 | 45 | 4.2 | 15 | 5 | Invention |
| 8 | H | H-1 | 45 | 4.1 | 15 | 5 | Invention |

As seen from Table 3, samples of the present invention had both high sensitivity and high Dmax and were contrasty, and therefore, the image quality was very good.

While the invention has been described in detail and with reference to specific embodiments thereof, it will be apparent to one skilled in the art that various changes and modifications can be made therein without departing from the scope of the claims.

## Claims

1. A heat-developable light-sensitive material comprising at least an organic acid silver, silver halide and a hydrazine derivative, wherein the silver halide contains at least one ion or complex ion of metals selected from Mn, Re, Fe, Co, Ni and Os.

2. A heat-developable light-sensitive material as claimed in claim 1, further comprising a developer.

3. A heat-developable light-sensitive material as claimed in claim 2, wherein the developer is a compound represented by the following formula (A): 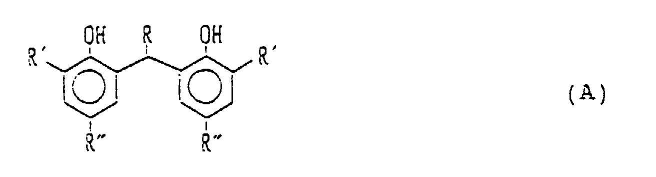 wherein R represents a hydrogen atom or an alkyl group having from 1 to 10 carbon atoms, and R' and R" each represents an alkyl group having from 1 to 5 carbon atoms.

4. A method for forming an image comprising:
imagewise exposing a heat-developable light-sensitive material comprising at least an organic acid silver, silver halide, a developer and a hydrazine derivative; and
then heating the material to form a black-and-white image comprising silver, wherein the silver halide contains at least one ion or complex ion of metals selected from Mn, Re, Fe, Co, Ni and Os.

## Patentansprüche

1. Wärmeentwickelbares lichtempfindliches Material, umfassend mindestens eine Verbindung einer organischen Säure mit Silber (organic acid silver), Silberhalogenid und ein Hydrazinderivat, wobei das Silberhalogenid mindestens ein Ion oder Komplexion von Metallen enthält, ausgewählt unter Mn, Re, Fe, Co, Ni und Os.

2. Wärmeentwickelbares lichtempfindliches Material nach Anspruch 1, weiter umfassend einen Entwickler.

3. Wärmeentwickelbares lichtempfindliches Material nach Anspruch 2, wobei der Entwickler eine Verbindung ist, dargestellt durch die folgende Formel (A): 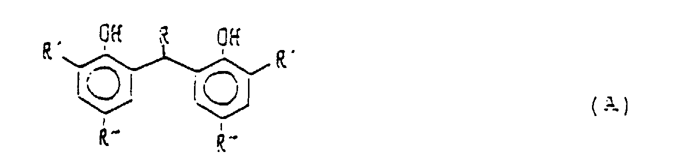 worin R ein Wasserstoffatom oder eine Alkylgruppe mit 1 bis 10 Kohlenstoffatomen darstellt und R' und R" jeweils eine Alkylgruppe mit 1 bis 5 Kohlenstoffatomen darstellen.

4. Verfahren zur Formung eines Bildes, umfassend:
Bildweises Belichten eines wärmeentwickelbaren lichtempfindlichen Materials, umfassend mindestens eine Verbindung einer organischen Säure mit Silber (organic acid silver), Silberhalogenid, einen Entwickler und ein Hydrazinderivat; und
Erwärmen des Materials zur Formung eines Schwarz-Weiss-Bildes, umfassend Silber,
wobei das Silberhalogenid mindestens ein Ion oder Komplexion eines Metalls enthält, ausgewählt unter Mn, Re, Fe, Co, Ni und Os.

## Revendications

1. Matériau sensible à la lumière développable à chaud comprenant au moins un acide organique d'argent, de l'halogénure d'argent et un dérivé d'hydrazine, dans lequel l'halogénure d'argent contient au moins un ion ou ion complexe de métaux sélectionnés parmi le Mn, le Re, le Fe, le Co, le Ni et l'Os.

2. Matériau sensible à la lumière développable à chaud selon la revendication 1, comprenant en outre un révélateur.

3. Matériau sensible à la lumière développable à chaud selon la revendication 2, dans lequel le révélateur est un composé représenté par la formule suivante (A) : 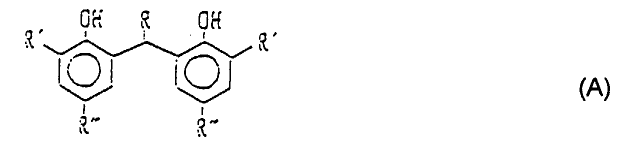 dans laquelle R représente un atome d'hydrogène ou un groupe alkyle ayant de 1 à 10 atomes de carbone, et R' et R" représentent chacun un groupe alkyle ayant de 1 à 5 atomes de carbone.

4. Procédé pour former une image comprenant :
l'exposition adaptée à l'image d'un matériau sensible à la lumière développable à chaud comprenant au moins un acide organique d'argent, de l'halogénure d'argent, un révélateur et un dérivé d'hydrazine; et
puis le chauffage du matériau pour former une image en noir et blanc comprenant de l'argent, dans lequel l'halogénure d'argent contient au moins un ion ou un ion complexe de métaux sélectionnés parmi le Mn, le Re, le Fe, le Co, le Ni et l'Os.
